(19) Europäisches Patentamt
European Patent Office
Office européen des brevets

(11) **EP 4 435 659 A1**

(12) **EUROPEAN PATENT APPLICATION**
published in accordance with Art. 153(4) EPC

(43) Date of publication:
**25.09.2024 Bulletin 2024/39**

(51) International Patent Classification (IPC):
**G06F 30/18** (2020.01)   **G06F 30/20** (2020.01)
**G06F 111/06** (2020.01)

(21) Application number: **22913430.9**

(22) Date of filing: **24.08.2022**

(86) International application number:
**PCT/CN2022/114437**

(87) International publication number:
**WO 2023/124147 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2021 CN 202111619868**

(71) Applicant: **Huawei Digital Power Technologies
Co., Ltd.
Shenzhen, Guangdong 518043 (CN)**

(72) Inventors:
• **LI, Wuhua
Hangzhou, Zhejiang 310058 (CN)**
• **ZHOU, Yu
Hangzhou, Zhejiang 310058 (CN)**
• **LUO, Haoze
Hangzhou, Zhejiang 310058 (CN)**
• **ZHENG, Sheng
Shenzhen, Guangdong 518043 (CN)**
• **ZHOU, Sizhan
Shenzhen, Guangdong 518043 (CN)**
• **CHEN, Huibin
Shenzhen, Guangdong 518043 (CN)**

(74) Representative: **Maiwald GmbH
Engineering
Elisenhof
Elisenstrasse 3
80335 München (DE)**

(54) **SUBSTRATE DESIGN METHOD AND APPARATUS FOR POWER MODULE, AND TERMINAL DEVICE**

(57)    This application relates to the field of power module technologies, and provides a method and an apparatus for designing a substrate of a power module, and a terminal device. The method includes: obtaining input parameters for designing the substrate of the power module; determining types of basic layout units and a quantity of basic layout units of each type in a circuit topology based on information about the circuit topology and a prestored diagram of a structure of each type of basic layout unit; and connecting, by using a pathfinding model, a connection path of graph elements of each basic layout unit in the circuit topology, to obtain a connection diagram of the substrate of the power module. In this application, a graph theory model defined for the basic layout units is used to describe relative positions of the basic layout units and a connection relationship between the basic layout units, then an optimal connection path in each commutation network in the circuit topology is determined by using an integer programming model, and a node and an interconnection edge of a line unit corresponding to each optimal connection path are established, so that a connection diagram is constructed. In this process, a substrate layout of the power module is autonomously designed, and no input of a manual layout template is needed.

FIG. 2

**Description**

This application claims priority to Chinese Patent Application No. 202111619868.6, filed with the China National Intellectual Property Administration on December 27, 2021 and entitled "METHOD AND APPARATUS FOR DESIGNING SUBSTRATE OF POWER MODULE, AND TERMINAL DEVICE", which is incorporated herein by reference in its entirety.

**TECHNICAL FIELD**

The present invention relates to the field of power module technologies, and in particular, to a method and an apparatus for designing a substrate of a power module, and a terminal device.

**BACKGROUND**

With development of a large-capacity new energy power generation system, an electric drive system of an electric vehicle, and other fields, there are increasing requirements for power density of the power module and a through-current capability of a chip. Usually, a plurality of chips are packaged in the power module for use However, due to parasitic inductance effects of a high-speed switch of the chip and a substrate line of the power module, performance of the chip is limited. Therefore, reducing and equalizing parasitic inductance inside the power module is very important for improving performance and security of the power module

With technological progress of the power module, heterogeneous components such as absorption capacitors are integrated into the module. This can greatly increase the power density of the power module, but also makes a design of the substrate of the power module increasingly complex. Due to characteristics of the power module such as a wide application range and a plurality of power classes, it is difficult to reuse a substrate design in different application scenarios. In addition, the substrate of the existing power module depends on a manual design, and the design is time-consuming and labor-consuming.

**SUMMARY**

To resolve the foregoing problem, embodiments of this application provide a method and an apparatus for designing a substrate of a power module, and a terminal device. A connection diagram model is used to describe relative positions of basic layout units and a connection relationship between the basic layout units. Various layouts of variable geometric topologies can be generated according to an integer programming algorithm, and no input of a manual layout template is needed. A layout size is described by using a constraint graph, and design size constraints are included. Therefore, quality of generation is high, and no design rule check is required in a subsequent processing step. With minimum parasitic inductance of a commutation loop and a minimum parasitic inductance difference between chip branches in a switch unit as optimization objectives, a geometric layout of the substrate of the power module can be optimized and computed by using a genetic algorithm, and automation of a substrate layout design can be implemented.

Therefore, embodiments of this application use the following technical solutions.

According to a first aspect, an embodiment of this application provides a method for designing a substrate of a power module. The method includes: obtaining input parameters for designing the substrate of the power module, where the input parameters include information about a circuit topology required for designing the substrate of the power module;

determining types of basic layout units and a quantity of basic layout units of each type in the circuit topology based on the information about the circuit topology and a prestored diagram of a structure of each type of basic layout unit, where the basic layout units are minimum units that constitute a geometric layout of the substrate of the power unit; and connecting, by using a pathfinding model, a connection path of graph elements of each basic layout unit in the circuit topology, to obtain a connection diagram of the substrate of the power module, where the graph elements are prestored nodes and interconnection edges of the basic layout unit that constitute the connection diagram in the circuit topology, and the connection path is a path between two nodes in graph elements of one basic layout unit or a path between one node in graph elements of one basic layout unit and one node in graph elements of another basic layout unit.

In this implementation, a graph theory model defined for the basic layout units is used to describe relative positions of the basic layout units and a connection relationship between the basic layout units, then an optimal connection path in each commutation network in the circuit topology required for designing the substrate of the power module is determined by using an integer programming model, and a node and an interconnection edge of a line unit corresponding to each optimal connection path are established, so that the connection diagram is constructed. In this process, a substrate layout of the power module can be autonomously designed without depending on expert experience, and no input of a manual layout template is needed.

In an implementation, the determining types of basic layout units and a quantity of basic layout units of each type in the circuit topology based on the information about the circuit topology and a prestored diagram of a structure of each type of basic layout unit specifically includes: generating a netlist of the circuit topology based on the information about the circuit topology; and computing types of basic layout units and a quantity of basic layout units of each type in the netlist of the circuit topology based on the prestored diagram of the structure of each type of basic layout unit, where the types of the basic layout units include a switch unit, an absorption unit, a terminal unit, and a line unit.

In this implementation, the netlist of the input circuit topology is processed by using the prestored diagram of the structure of each type of basic layout unit. In this way, each basic layout unit in the netlist of the circuit topology can be identified, and specific types of basic layout units and the quantity of basic layout units of each type in the netlist of the circuit topology are obtained. This provides a basis for subsequent generation of a connection diagram and can reduce difficulty in designing the substrate of the power module.

In an implementation, the pathfinding model is at least one of an integer programming model and a depth-first search model.

In this implementation, in a process of generating the connection diagram, for a specified commutation network between two nodes, there are generally a plurality of flow paths, and an integer programming model formed by an integer programming algorithm or a depth-first search model formed by a depth-first search algorithm may be selected to select a shortest flow path in the commutation network. Therefore, a structure of the connection diagram of the designed substrate of the power module is simple, and manufacturing costs of the power module can be reduced.

In an implementation, the connecting, by using a pathfinding model, a connection path of graph elements of each basic layout unit in the circuit topology, to obtain a connection diagram of the substrate of the power module specifically includes: determining at least one commutation network in the netlist of the circuit topology, at least one connection path in each commutation network, and a length of each connection path, where the commutation network refers to a network path between two nodes in the netlist of the circuit topology, and the two nodes are two nodes on which two ports of a switch unit are located, and/or two nodes on which two ports of an absorption unit are located, and/or two nodes on which one port of a switch unit and one port of another switch unit are located, and/or two nodes on which one port of an absorption unit and one port of another absorption unit are located, and/or two nodes on which one port of a switch unit and one port of an absorption unit are located; training a linear programming model based on an optimization objective, a constraint of the commutation network, and a constraint of a node on the commutation network, and constructing the integer programming model; inputting the at least one connection path in each commutation network and the length of each connection path into the integer programming model, to obtain a target commutation path in each commutation network, where the target commutation path is a commutation path that is in each commutation network and that meets a specified length threshold; establishing a line node on each network node on the target commutation path in each commutation network, and establishing an interconnection edge on the target commutation path in each commutation network, where the line node is a node on which a line unit is disposed; establishing a terminal path on the target commutation path in each commutation network by using the depth-first search model, and establishing a terminal node and an interconnection edge on the terminal path, where the terminal path is a path for connecting a terminal unit to the commutation network, and the terminal node is a node on which the terminal unit is disposed; and outputting non-empty nodes and interconnection edges in the netlist of the circuit topology to obtain the connection diagram of the substrate of the power module.

In this implementation, if the basic layout units generally include a switch unit and a terminal unit and further include an absorption unit, a commutation path may be constructed based on the switch unit and the absorption unit, and each commutation network is constructed between corresponding nodes in the netlist of the circuit topology by using a port of the switch unit and a port of the absorption unit, then a shortest path of each commutation network is selected, an optimal commutation path of each commutation network is connected, then each terminal unit is connected to the commutation path, and finally a line node and an interconnection edge of the commutation path are established, so that the connection diagram of the substrate of the power module is obtained. Because the absorption unit has greater impact on parasitic inductance of a commutation loop and a parasitic inductance difference between chip branches in the switch unit than the terminal unit, the commutation path is preferably constructed by using the switch unit and the absorption unit. This can effectively reduce the parasitic inductance of the commutation loop and reduce the parasitic inductance difference between chip branches in the switch unit.

In an implementation, the connecting, by using a pathfinding model, a connection path of graph elements of each basic layout unit in the circuit topology, to obtain a connection diagram of the substrate of the power module specifically includes: determining at least one commutation network in the netlist of the circuit topology, at least one connection path in each commutation network, and a length of each connection path, where the commutation network refers to a network path between two nodes in the netlist of the circuit topology, and the two nodes are two nodes on which two ports of a switch unit are located, and/or two nodes on which one port of a switch unit and one port of another switch unit are located, and/or two nodes on which one port of a terminal unit and one port of another terminal unit are located, and/or two nodes on which one port of a switch unit and one port of a terminal unit are located; training a linear programming model based on an optimization objective, a constraint of the commutation network, and a constraint of a node on the commutation network, and constructing the integer programming model; inputting the at least one connection path in each commutation network and the length of each connection path into the integer programming model, to obtain a target commutation path in each commutation network, where the target commutation path is a commutation path that is in each commutation network and that meets a specified length threshold; establishing a line node on each network node on the target commutation path in each commutation network, and establishing an interconnection edge on the target commutation path in each commutation network, where the line node is a node on which a line unit is disposed; and outputting non-empty nodes and interconnection edges in the netlist of the circuit topology to obtain the connection diagram of the substrate of the power module.

In this implementation, if the basic layout units generally include a switch unit and a terminal unit and do not include an absorption unit, a commutation path may be constructed based on the switch unit and the terminal unit, and each commutation network is constructed between corresponding nodes in the netlist of the circuit topology by using a port of the switch unit and a port of the terminal unit, then a shortest path of each commutation network is selected, an optimal commutation path of each commutation network is connected, and finally a line node and an interconnection edge of the commutation path are established, so that the connection diagram of the substrate of the power module is obtained. Constructing the commutation path by using the switch unit and the terminal unit that have nodes can effectively reduce parasitic inductance of the commutation loop and reduce a parasitic inductance difference between chip branches in the switch unit

In an implementation, the input parameters further include design size constraints of the basic layout units; and the method further includes: determining an original size of each type of basic layout unit based on the design size constraints; and

scanning the connection diagram of the substrate of the power module based on the original size of each type of basic layout unit and a prestored scaling variable of each type of basic layout unit, to obtain a size constraint graph of the connection diagram, where the size constraint graph is used to limit a size of each basic layout unit when the geometric layout is constructed based on the connection diagram.

In this implementation, the original size, that is, a minimum size, of each type of basic layout unit may be computed based on the design size constraints, and then the connection diagram of the substrate of the power module is scanned based on the prestored scaling variable of each type of basic layout unit, so that the size constraint graph of the connection diagram is obtained, where the size constraint graph may be used to limit the size of each basic layout unit of the layout when the geometric layout is constructed subsequently, and the size constraint graph may be used to describe different sizes and includes size constraints. Therefore, a generated substrate template of the power module has high quality, and no design rule check is required in a subsequent processing step.

In an implementation, the scanning the netlist of the circuit topology of the connection diagram of the substrate of the power module to obtain a size constraint graph of the connection diagram specifically includes: scanning the connection diagram of the substrate of the power module along a first direction, to obtain a size constraint graph of the connection diagram in the first direction; and scanning the connection diagram of the substrate of the power module along a second direction, to obtain a size constraint graph of the connection diagram in the second direction, where the first direction and the second direction are directions perpendicular to each other.

In this implementation, the connection diagram is scanned in a horizontal direction and a vertical direction, so that a size constraint graph of the connection diagram in the horizontal direction and a size constraint graph of the connection diagram in the vertical direction are obtained. The size constraint graphs constructed in the two perpendicular directions may be used to limit sizes of the basic layout units. Therefore, a size of the constructed geometric layout of the substrate of the power module is a most preferred size, template quality is high, and no design rule check is required in the subsequent processing step.

In an implementation, the size constraint graph includes a constraint node and a constraint edge, the constraint node is a scanning line for scanning the connection diagram of the substrate of the power module, and the constraint edge is a distance between scanning lines and is used to constrain the size of each basic layout unit.

In this implementation, the constraint node generally corresponds to a line node, a terminal node, a switch node, or an absorption node at an edge of the connection diagram, and the constraint edge generally corresponds to a distance between two adjacent nodes. By using the constraint node as a scanning edge, the connection diagram may be split, so that each area in which a basic layout unit can be placed in the connection diagram is obtained. Then a size of the area in which the basic layout unit can be placed is used as the constraint edge, to limit a size of the basic layout unit that can be placed. In this way, a layout size is limited, so that the size of the constructed geometric layout of the substrate of the power module is the most preferred size.

In an implementation, the method further includes: constructing the geometric layout of the substrate of the power module based on the connection diagram of the substrate of the power module and the size constraint graph of the connection diagram

In this implementation, in a process of constructing the geometric layout of the substrate of the power module, a quantity of basic layout units and a position in which each basic layout unit is disposed may be determined by using the connection diagram, and the size of each basic layout unit may be limited by using the size constraint graph. In this way, the geometric layout of the substrate of the power module is constructed, and the size of the constructed geometric layout of the substrate of the power module is optimal.

In an implementation, the method further includes: detecting parasitic inductance of a commutation loop in the geometric layout of the substrate of the power module, and/or parasitic inductance of a chip branch in a switch unit, and/or thermal resistance of a chip in a switch unit; and outputting the geometric layout of the substrate of the power module when the parasitic inductance of the commutation loop in the geometric layout of the substrate of the power module is less than a first threshold, and/or the parasitic inductance of the chip branch in the switch unit is greater than a second threshold, and/or the thermal resistance of the chip in the switch unit is less than a third threshold

In this implementation, after the geometric layout of the substrate of the power module is constructed, quality of the geometric layout of the substrate of the power module needs to be detected based on at least one of three conditions: the parasitic inductance of the commutation loop, the parasitic inductance of the chip branch in the switch unit, and the thermal resistance of the chip in the switch unit. If the parasitic inductance of the commutation loop is low, or the parasitic inductance of the chip branch in the switch unit is low, or the thermal resistance of the chip in the switch unit is low, it indicates that detected performance of the geometric layout of the designed substrate of the power module is good.

In an implementation, the method further includes: reconstructing a geometric layout of the substrate of the power module when the parasitic inductance of the commutation loop in the geometric layout of the substrate of the power module is not less than the first threshold, and/or the parasitic inductance of the chip branch in the switch unit is not less than the second threshold, and/or the thermal resistance of the chip in the switch unit is not less than the third threshold.

In this implementation, in the constructed geometric layout of the substrate of the power module, if the parasitic inductance of the commutation loop is high, or the parasitic inductance difference between chip branches in the switch unit is large, or the thermal resistance of the chip in the switch unit is high, it indicates that detected performance of the geometric layout of the designed substrate of the power module is poor, and that the substrate needs to be redesigned.

In an implementation, the method further includes: inputting the geometric layout of the substrate of the power module into a genetic computation model, and outputting a target geometric layout, where the target geometric layout is a geometric layout of the substrate of the power module that meets a specified condition, and the specified condition is reducing a parasitic inductance value of the commutation loop, and/or reducing a parasitic inductance difference between chip branches in the switch unit, and/or reducing the thermal resistance of the chip in the switch unit to reach a Pareto optimal front.

In this implementation, after the geometric layout of the substrate of the power module is constructed, with minimum parasitic inductance of the commutation loop, and/or a minimum parasitic inductance difference between chip branches in the switch unit, and/or minimum thermal resistance of the chip in the switch unit as optimization objectives, the geometric layout of the substrate of the power module may be input into the genetic computation model constructed by a genetic algorithm for optimal search, a geometric layout in which the three parameters of the minimum parasitic inductance of the commutation loop, the minimum parasitic inductance difference between chip branches in the switch unit, and the minimum thermal resistance of the chip in the switch unit reach a Pareto optimal front is obtained and used as an optimal geometric layout, and then the geometric layout is output. In this way, the optimal geometric layout of the substrate of the power module is obtained.

According to a second aspect, an embodiment of this application provides an apparatus for designing a substrate of a power module. The apparatus includes: a transceiver unit, configured to obtain input parameters for designing the substrate of the power module, where the input parameters include information about a circuit topology required for designing the substrate of the power module; and a processing unit, configured to: determine types of basic layout units and a quantity of basic layout units of each type in the circuit topology based on the information about the circuit topology and a prestored diagram of a structure of each type of basic layout unit, where the basic layout units are minimum units that constitute a geometric layout of the substrate of the power unit, and connect, by using a pathfinding model, a connection path of graph elements of each basic layout unit in the circuit topology, to obtain a connection diagram of the substrate of the power module, where the graph elements are prestored nodes and interconnection edges of the basic layout unit that constitute the connection diagram in the circuit topology, and the connection path is a path between two nodes in graph elements of one basic layout unit or a path between one node in graph elements of one basic layout unit and one node in graph elements of another basic layout unit

In an implementation, the processing unit is specifically configured to: generate a netlist of the circuit topology based on the information about the circuit topology; and compute types of basic layout units and a quantity of basic layout units of each type in the netlist of the circuit topology based on the prestored diagram of the structure of each type of basic layout unit, where the types of the basic layout units include a switch unit, an absorption unit, a terminal unit, and a line unit.

In an implementation, the pathfinding model is at least one of an integer programming model and a depth-first search model.

In an implementation, the processing unit is specifically configured to: determine at least one commutation network in the netlist of the circuit topology, at least one connection path in each commutation network, and a length of each connection path, where the commutation network refers to a network path between two nodes in the netlist of the circuit topology, and the two nodes are two nodes on which two ports of a switch unit are located, and/or two nodes on which two ports of an absorption unit are located, and/or two nodes on which one port of a switch unit and one port of another switch unit are located, and/or two nodes on which one port of an absorption unit and one port of another absorption unit are located, and/or two nodes on which one port of a switch unit and one port of an absorption unit are located; train a linear programming model based on an optimization objective, a constraint of the commutation network, and a constraint of a node on the commutation network, and construct the integer programming model; input the at least one connection path in each commutation network and the length of each connection path into the integer programming model, to obtain a target commutation path in each commutation network, where the target commutation path is a commutation path that is in each commutation network and that meets a specified length threshold; establish a line node on each network node on the target commutation path in each commutation network, and establish an interconnection edge on the target commutation path in each commutation network, where the line node is a node on which a line unit is disposed; establish a terminal path on the target commutation path in each commutation network by using the depth-first search model, and establish a terminal node and an interconnection edge on the terminal path, where the terminal path is a path for connecting a terminal unit to the commutation network, and the terminal node is a node on which the terminal unit is disposed; and output non-empty nodes and interconnection edges in the netlist of the circuit topology to obtain the connection diagram of the substrate of the power module.

In an implementation, the processing unit is specifically configured to: determine at least one commutation network in the netlist of the circuit topology, at least one connection path in each commutation network, and a length of each connection path, where the commutation network refers to a network path between two nodes in the netlist of the circuit topology, and the two nodes are two nodes on which two ports of a switch unit are located, and/or two nodes on which one port of a switch unit and one port of another switch unit are located, and/or two nodes on which one port of a terminal unit and one port of another terminal unit are located, and/or two nodes on which one port of a switch unit and one port of a terminal unit are located; train a linear programming model based on an optimization objective, a constraint of the commutation network, and a constraint of a node on the commutation network, and construct the integer programming model; input the at least one connection path in each commutation network and the length of each connection path into the integer programming model, to obtain a target commutation path in each commutation network, where the target commutation path is a commutation path that is in each commutation network and that meets a specified length threshold; establish a line node on each network node on the target commutation path in each commutation network, and establish an interconnection edge on the target commutation path in each commutation network; and output non-empty nodes and interconnection edges in the netlist of the circuit topology to obtain the connection diagram of the substrate of the power module.

In an implementation, the input parameters further include design size constraints of the basic layout units; and the processing unit is further configured to determine an original size of each type of basic layout unit based on the design size constraints; and scan the connection diagram of the substrate of the power module based on the original size of each type of basic layout unit and a prestored scaling variable of each type of basic layout unit, to obtain a size constraint graph of the connection diagram, where the size constraint graph is used to limit a size of each basic layout unit when the geometric layout is constructed based on the connection diagram

In an implementation, the processing unit is specifically configured to: scan the connection diagram of the substrate of the power module along a first direction, to obtain a size constraint graph of the connection diagram in the first direction; and scan the connection diagram of the substrate of the power module along a second direction, to obtain a size constraint graph of the connection diagram in the second direction, where the first direction and the second direction are directions perpendicular to each other.

In an implementation, the size constraint graph includes a constraint node and a constraint edge, the constraint node is a scanning line for scanning the connection diagram of the substrate of the power module, and the constraint edge is a distance between scanning lines and is used to constrain the size of each basic layout unit.

In an implementation, the processing unit is further configured to: construct the geometric layout of the substrate of the power module based on the connection diagram of the substrate of the power module and the size constraint graph of the connection diagram

In an implementation, the processing unit is further configured to: detect parasitic inductance of a commutation loop in the geometric layout of the substrate of the power module, and/or parasitic inductance of a chip branch in a switch unit, and/or thermal resistance of a chip in a switch unit; and output the geometric layout of the substrate of the power module when the parasitic inductance of the commutation loop in the geometric layout of the substrate of the power module is less than a first threshold, and/or the parasitic inductance of the chip branch in the switch unit is less than a second threshold, and/or the thermal resistance of the chip in the switch unit is less than a third threshold.

In an implementation, the processing unit is further configured to: reconstruct a geometric layout of the substrate of the power module when the parasitic inductance of the commutation loop in the geometric layout of the substrate of the power module is not less than the first threshold, and/or the parasitic inductance of the chip branch in the switch unit is not less than the second threshold, and/or the thermal resistance of the chip in the switch unit is not less than the third threshold.

In an implementation, the processing unit is further configured to: input the geometric layout of the substrate of the power module into a genetic computation model, and output a target geometric layout, where the target geometric layout is a geometric layout of the substrate of the power module that meets a specified condition, and the specified condition is reducing a parasitic inductance value of the commutation loop, and/or reducing a parasitic inductance difference between chip branches in the switch unit, and/or reducing the thermal resistance of the chip in the switch unit to a Pareto optimal front.

According to a third aspect, an embodiment of this application provides a terminal device, including at least one transceiver, at least one memory, and at least one processor. The processor is configured to execute instructions stored in the memory, so that the terminal device performs the embodiment of each possible implementation of the first aspect.

According to a fourth aspect, an embodiment of this application provides a computing device, including a memory and a processor. The memory is configured to store instructions. The processor is configured to invoke the instructions stored in the memory, to implement the embodiment of each possible implementation of the first aspect.

According to a fifth aspect, an embodiment of this application provides a computer-readable storage medium. The computer-readable storage medium stores a computer program. When the computer program is executed on a computer, the computer is enabled to perform the embodiment of each possible implementation of the first aspect.

According to a sixth aspect, an embodiment of this application provides a computer program product. The computer program product includes instructions. When the instructions are executed on a computer, the computer is enabled to implement the embodiment of each possible implementation of the first aspect.

## BRIEF DESCRIPTION OF DRAWINGS

The following briefly describes the accompanying drawings that need to be used in the descriptions of embodiments or the prior art.

FIG. 1 is a schematic diagram of an architecture of a terminal device according to an embodiment of this application;

FIG. 2 is a schematic diagram of an architecture of a processor according to an embodiment of this application;

FIG. 3 is a schematic diagram of a relationship between a geometric layout, a graph element, and a scaling variable of each basic layout unit according to an embodiment of this application;

FIG. 4 is a flowchart of a process of generating a connection diagram of a substrate of a power module according to an embodiment of this application;

FIG. 5 is a flowchart of a process of generating a connection diagram of a substrate of another power module according to an embodiment of this application;

FIG. 6(a) is a schematic diagram of various connection paths in a commutation network between two nodes in a netlist of a circuit topology according to an embodiment of this application;

FIG. 6(b) is a schematic diagram of various connection paths in a commutation network between two nodes in a netlist of another circuit topology according to an embodiment of this application;

FIG. 7(a) is a connection diagram of a substrate of a power module according to an embodiment of this application;

FIG. 7(b) is a geometric layout constructed based on the connection diagram shown in FIG. 7(a) according to an embodiment of this application;

FIG. 7(c) is a size constraint graph in a horizontal direction and a size constraint graph in a vertical direction that are obtained based on the connection diagram shown in FIG. 7(a) according to an embodiment of this application;

FIG. 8(a) is a size constraint graph in a horizontal direction and a size constraint graph in a vertical direction that are obtained after the size constraint graphs shown in FIG. 7(c) are extended in mirror symmetry along a horizontal direction according to an embodiment of this application;

FIG. 8(b) is a geometric layout obtained after the layout shown in FIG. 7(b) is extended in mirror symmetry along a horizontal direction according to an embodiment of this application;

FIG. 9 is corresponding geometric layouts constructed based on connection diagrams of substrates of other 16 different power modules according to an embodiment of this application;

FIG. 10 is a flowchart of a process of optimizing a substrate layout of a power module by using a genetic algorithm according to an embodiment of this application;

FIG. 11 is a schematic diagram for fitting all previous iteration results and a Pareto front result according to an embodiment of this application;

FIG. 12 is a schematic diagram of layouts of three front solutions and corresponding design parameters according to an embodiment of this application;

FIG. 13 is a schematic diagram of results of simulation evaluation performed by using a front solution C according to an embodiment of this application; and

FIG. 14 is a schematic diagram of a framework of an apparatus for designing a substrate of a power module according to an embodiment of this application.

## DESCRIPTION OF EMBODIMENTS

The following describes the technical solutions in the embodiments of this application with reference to the accompanying drawings in the embodiments of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In this specification and claims of this application, the terms such as "first" and "second" are intended to distinguish between different objects, but do not indicate a particular order of the objects. For example, a first indication message and a second indication message are used to distinguish between different response messages, but do not indicate a particular order of the response messages.

In embodiments of this application, the word "example" or "for example" is used to represent giving an example, an illustration, or a description. Any embodiment or design scheme described as "example" or "for example" in the embodiments of this application should not be explained as being more preferred or having more advantages than another embodiment or design scheme. Exactly, use of the word such as "example" or "for example" is intended to present a relative concept in a specific manner.

In the descriptions of embodiments of this application, unless otherwise specified, "a plurality of" means two or more. For example, a plurality of processing units are two or more processing units, and a plurality of elements are two or more elements.

A power module refers to power electronic components that are combined based on functions and then potted into one module. Because the power module is different from an integrated circuit in terms of a component type, a working mode, a manufacturing technology, and the like, an existing electronic design automation tool for the integrated circuit cannot meet a design requirement of the power module. In addition, an existing design automation method for the power module is still at an initial stage, and has many disadvantages. For example, a layout template needs to be manually input, resulting in a limited degree of freedom of the generated power module and heavy dependence on expert experience. A layout representation model does not include a line connectivity constraint and a design size constraint, resulting in poor manufacturability of the generated power module and low optimization efficiency. The design of the power module only focuses on how to reduce parasitic inductance of a commutation loop, and does not take optimization of parasitic inductance equalization of a chip branch in a switch unit into account, resulting in poor performance of the designed power module.

In view of this, in this application, a graph theory model of a basic layout unit is used as a basis, a linear programming algorithm is used to generate connection templates of various layouts, and then a genetic algorithm is used to compute a unit size with minimum parasitic inductance of a commutation loop and most equalized parasitic inductance of chip branches in a switch unit, so that a substrate layout of a power module is autonomously designed.

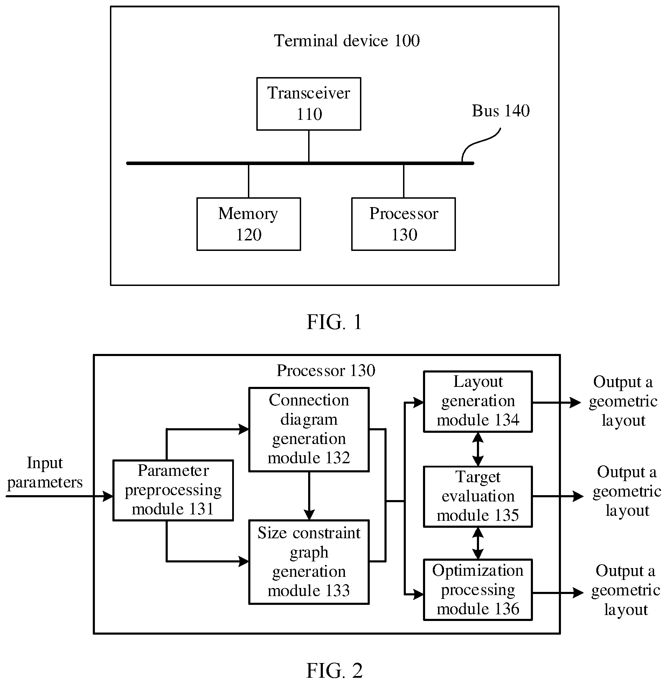

FIG. 1 is a schematic diagram of an architecture of a terminal device according to an embodiment of this application. As shown in FIG. 1, the terminal device 100 includes a transceiver 110, a memory 120, a processor 130, and a bus 140. The transceiver 110, the memory 120, and the processor 130 separately establish a communication connection by using the bus 140, to implement mutual communication between the modules.

The transceiver 110 may implement signal inputting (receiving) and outputting (sending). For example, the transceiver 110 may include a transceiver or a radio frequency chip. The transceiver 110 may further include a communications interface. For example, the terminal device 100 may receive, by using the transceiver 110, data sent by another device such as a terminal device or a cloud, or may send, by using the transceiver 110, data processed by the processor 130 to another device.

The memory 120 may store a program (or instructions or code), and the program may be run by the processor 130, so that the processor 130 performs the method for designing a substrate of a power module based on a graph theory model. Optionally, the memory 120 may further store data. For example, the processor 130 may read the data stored in the memory 120, where the data may be stored at a same storage address as the program, or stored at a storage address different from a storage address of the program. In this solution, the processor 130 and the memory 120 may be disposed separately, or may be integrated, for example, integrated on a board or a system-on-chip (system on chip, SOC).

The processor 130 may be a general-purpose processor or a dedicated processor. For example, the processor 130 may include a central processing unit (central processing unit, CPU) and/or a baseband processor. For example, the processor 130 may perform, based on data sent by another device and received by the transceiver 110, the method for designing a substrate of a power module based on a graph theory model, and generate a design scheme for a substrate of a power module

It may be understood that the architecture shown in this embodiment of this application does not constitute a specific limitation on the terminal device 100. In some other embodiments of this application, the terminal device 100 may include more or fewer components than those shown in the figure, or some components are combined, or some components are split, or component arrangements are different. The components shown in the figure may be implemented by hardware, software, or a combination of software and hardware.

FIG. 2 is a schematic diagram of an architecture of a processor according to an embodiment of this application. As shown in FIG. 2, the processor 130 may be divided into a parameter preprocessing module 131, a connection diagram generation module 132, a constraint graph generation module 133, a layout generation module 134, an inductance evaluation module 135, and an optimization processing module 136 based on functions that are performed. Functions performed by the modules are specifically as follows:

Before performing the method for designing a substrate of a power module based on a graph theory model, the processor 130 needs to obtain, by using the transceiver 120, input parameters for designing the substrate of the power module, for example, configuration information of the power module and design size constraints. For example, the input parameters for designing the substrate of the power module may be parameters shown in Table 1, and are specifically as follows:

**Table 1 Input parameters for designing the substrate of the power module**

| Type | Parameter | Value |
|---|---|---|
| Information about a circuit topology | Circuit topology | Half bridge |
| Design size constraints | Quantity of parallel chips | 4 |
| | Chip size | $5.9 \times 3.1$ mm |
| | Size of an absorption capacitor | $6.0 \times 5.0$ mm |
| | Size of a terminal pad | $\geq 3.0 \times 3.0$ mm |
| | Line width of a metal layer | $\geq 1.0$ mm |
| | Spacing between metal layers | 0.7 mm |
| | Thickness of a metal layer | 0.3 mm |
| | Soldering spacing | $\geq 1.0$ mm |
| | Bonding spacing | $\geq 1.0$ mm |

The information about the circuit topology required for designing the substrate of the power module includes a type of the circuit topology, for example, a half-bridge type. The design size constraints include the size of the chip, the size of the absorption capacitor, the size of the terminal pad, the line width of the metal layer, the spacing between metal layers, the thickness of the metal layer, the soldering spacing, the bonding spacing, and the like. Optionally, the half-bridge type is selected as the circuit topology required for designing the substrate of the power module, the quantity of parallel chips is 4, the size of the chip is $5.9 \times 3.1$ mm, the size of the absorption capacitor is $6.0 \times 5.0$ mm, the size of the terminal pad is greater than or equal to $3.0 \times 3.0$ mm, the line width of the metal layer is greater than or equal to 1.0 mm, the spacing between metal layers is 0.7 mm, the thickness of the metal layer is 0.3 mm, the soldering spacing is greater than or equal to 1.0 mm, and the bonding spacing is greater than or equal to 1.0 mm. The example herein in this application is not intended to limit this application.

The parameter preprocessing module 131 is configured to generate a netlist (netlist) of the circuit topology based on the information about the circuit topology required for designing the substrate of the power module, and determine types of basic layout units and a quantity of basic layout units of each type in the netlist of the circuit topology based on a prestored diagram of a structure of each basic layout unit. The circuit topology, also referred to as a circuit diagram, is a set including only a branch (branch) and a node (node) after the circuit diagram is re-abstracted. Each two-terminal component that forms the circuit is referred to as a branch, and a connection point between two or more branches is referred to as a node. The circuit topology describes a connection relationship and properties of the circuit, that is, the connection relationship between the branch and the node. In this application, the information about the circuit

9

topology required for designing the substrate of the power module is input into the parameter preprocessing module 131, and the netlist of the circuit topology is automatically generated. The netlist includes a name of a circuit component, a number of the circuit component, a port number of the circuit component, connectivity information about whether ports are interconnected, and the like.

The basic layout units are minimum units that constitute the power module. In this application, the basic layout units may be classified into a switch unit, an absorption unit, a terminal unit, a line unit, and other units. A basic layout unit generally includes a chipset and a metal layer. The chipset includes at least one chip and/or at least one component. The chips or components in the chipset may be electrically connected to the metal layer, and the metal layer is electrically connected to a node in the circuit topology, so that the chipset is electrically connected to the substrate of the power module, thereby reducing difficulty in designing the substrate of the power module.

The parameter preprocessing module 131 is further configured to determine information about various basic layout units, such as geometric layout structures, graph elements, and scaling variables based on constraints for determining the types and design sizes of the basic layout units. A geometric layout of a basic layout unit includes at least one metal layer, or further includes a chipset. If the chipset is further included, the chipset includes at least one chip and/or at least one component, each chip or component is deployed in a middle position of the metal layer as far as possible, and each chip or component is disposed based on design constraints such as a minimum line width, a minimum line spacing, and a minimum soldering spacing. Graph elements of the basic layout unit include nodes and interconnection edges, and are used to generate a connection diagram. A scaling variable of the basic layout unit includes a scaling variable in a horizontal direction and a scaling variable in a vertical direction, and is used to optimize a size of the basic layout unit in the horizontal direction and a size of the basic layout unit in the vertical direction. The horizontal direction and the vertical direction are two directions perpendicular to each other.

The following describes information about each type of basic layout unit in detail specifically as follows:
The switch unit includes one chipset and three metal layers. The chipset includes one or more power semiconductor chips. The power semiconductor chips in the chipset are disposed in parallel on a metal layer. Each power semiconductor chip in the chipset electrically connects a drive electrode on a surface of the power semiconductor chip to a metal layer by using an interconnection structure on the top of the power semiconductor chip, and a power electrode on the surface of each power semiconductor chip in the chipset is electrically connected to a metal layer.

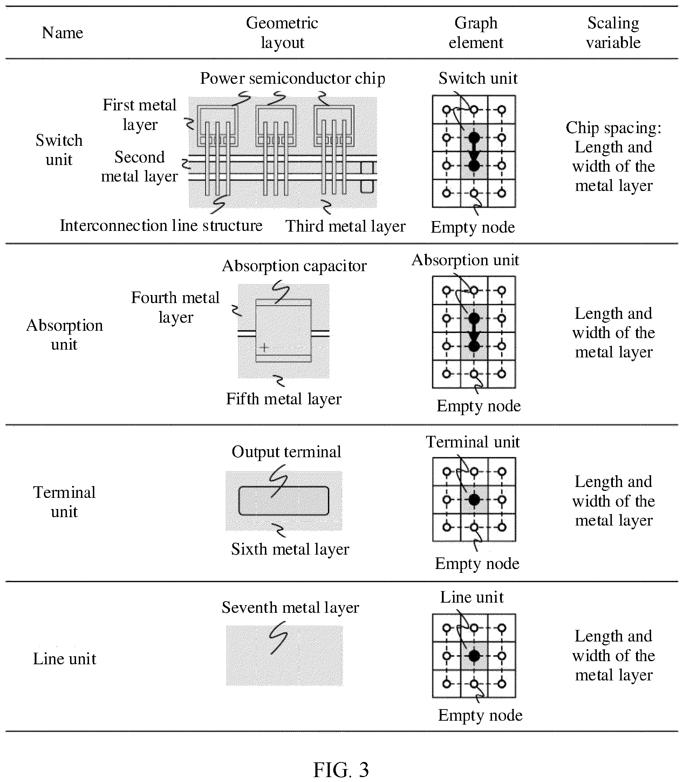

For example, in a geometric layout of a switch unit shown in FIG. 3, the switch unit includes a chipset, a first metal layer, a second metal layer, and a third metal layer. The chipset includes three power semiconductor chips, and the power semiconductor chips are disposed in parallel on the first metal layer. Each power semiconductor chip electrically connects a drive electrode on a surface of the power semiconductor chip to the second metal layer by using an interconnection structure on the top of the power semiconductor chip. A power electrode on the surface of each power semiconductor chip is electrically connected to the third metal layer. The second metal layer is located between the first metal layer and the third metal layer. Preferably, in a design scheme for the switch unit, the chipsets are disposed side by side in positions close to the second metal layer, so that a length of the interconnection structure is minimized.

Corresponding to the geometric layout of the switch unit in FIG. 3, in graph elements of the switch unit, the switch unit includes two adjacent nodes and one interconnection edge. The two adjacent nodes indicate that the switch unit occupies two adjacent nodes in the circuit topology, and the interconnection edge indicates a current flow path in the switch unit.

Corresponding to the geometric layout of the switch unit in FIG. 3, a scaling variable of the switch unit includes a spacing between the three chips in the chipset, a length and a width of the first metal layer, a length and a width of the second metal layer, a length and a width of the third metal layer, and the like. The scaling variable of the switch unit means scaling down or scaling up in a same proportion according to the scaling variable, so that the switch unit is scaled down or scaled up as a whole, without changing a shape of the switch unit, a relative position relationship between the chips, a relative position relationship between the metal layers, and sizes of the chips or components.

Optionally, the scaling variable of the switch unit may be classified into a scaling variable in the horizontal direction and a scaling variable in the vertical direction. The scaling variable in the horizontal direction represents sizes of the chipset and the metal layers in the horizontal direction, for example, a width of the first metal layer, a width of the first metal layer, and a width of the first metal layer. The scaling variable in the vertical direction represents sizes of the chipset and the metal layers in the vertical direction, for example, a spacing between the three chips, a length of the first metal layer, a length of the first metal layer, and a length of the first metal layer.

Therefore, the information about the basic layout unit, received by the processor 130 by using the transceiver 110, includes data such as a geometric layout structure of the switch unit, the graph elements of the switch unit, and the scaling variable of the switch unit.

The absorption unit includes one chipset and two metal layers. The chipset includes one or more absorption capacitor components, the absorption capacitor components in the chipset are disposed in parallel in middle positions of the two metal layers, and electrodes on each absorption capacitor component are electrically connected to the two metal layers respectively. Optionally, the absorption capacitor component may be a decoupling capacitor made of a ceramic material, a thin film material, or a silicon material, or may be a damping absorption component with a capacitance characteristic and a resistance characteristic. This is not limited in this application.

For example, FIG. 3 shows a geometric layout of the absorption unit. The absorption unit includes a chipset, a fourth metal layer, and a fifth metal layer. The chipset includes an absorption capacitor, the absorption capacitor is disposed in a middle position between the fourth metal layer and the fifth metal layer, and electrodes on the absorption capacitor are electrically connected to the fourth metal layer and the fifth metal layer respectively.

Corresponding to the geometric layout of the absorption unit in FIG. 3, in graph elements of the absorption unit, the absorption unit includes two adjacent nodes and one interconnection edge. The two adjacent nodes indicate that the absorption unit occupies two adjacent nodes in the circuit topology, and the interconnection edge indicates a current flow path in the absorption unit.

Corresponding to the geometric layout of the absorption unit in FIG. 3, a scaling variable of the absorption unit includes a length and a width of the fourth metal layer in the chipset, a length and a width of the fifth metal layer, and the like. The scaling variable of the absorption unit means scaling down or scaling up in a same proportion according to the scaling variable, so that the absorption unit is scaled down or scaled up as a whole, without changing a shape of the absorption unit, a relative position relationship between the metal layers, and a size of a chip or a component.

Optionally, the scaling variable of the absorption unit may be classified into a scaling variable in the horizontal direction and a scaling variable in the vertical direction. The scaling variable in the horizontal direction represents sizes of the chipset and the metal layers in the horizontal direction, for example, a width of the fourth metal layer and a width of the fifth metal layer. The scaling variable in the vertical direction represents sizes of the chipset and the metal layers in the vertical direction, for example, a length of the fourth metal layer and a length of the fifth metal layer.

Therefore, the information about the basic layout unit, received by the processor 130 by using the transceiver 110, includes data such as a geometric layout structure of the absorption unit, the graph elements of the absorption unit, and the scaling variable of the absorption unit.

The terminal unit includes one chipset and one metal layer. The chipset includes one or more terminal components. The terminal component has power output terminals such as a positive electrode, a negative electrode, and an alternating current. An output terminal on each terminal component is disposed in a middle position of the metal layer and is electrically connected to the metal layer. For example, FIG. 3 shows a geometric layout of the terminal unit. The terminal unit includes a chipset and a sixth metal layer. The chipset includes one terminal component, and power output terminals such as a positive electrode, a negative electrode, and an alternating current on the terminal component are disposed on the sixth metal layer and are electrically connected to the sixth metal layer.

Corresponding to the geometric layout of the terminal unit in FIG. 3, in a graph element of the terminal unit, the terminal unit includes one node. The node indicates that the terminal unit occupies one node in the circuit topology.

Corresponding to the geometric layout of the terminal unit in FIG. 3, a scaling variable of the terminal unit includes a length and a width of the sixth metal layer, and the like. The scaling variable of the terminal unit means scaling down or scaling up in a same proportion according to the scaling variable, so that the terminal unit is scaled down or scaled up as a whole, without changing a shape of the terminal unit, and a size of a chip or a component.

Optionally, the scaling variable of the terminal unit may be classified into a scaling variable in the horizontal direction and a scaling variable in the vertical direction. The scaling variable in the horizontal direction represents sizes of the chipset and the metal layer in the horizontal direction, for example, a width of the sixth metal layer. The scaling variable in the vertical direction represents sizes of the chipset and the metal layer in the vertical direction, for example, a length of the sixth metal layer.

Therefore, the information about the basic layout unit, received by the processor 130 by using the transceiver 110, includes data such as a geometric layout structure of the terminal unit, the graph element of the terminal unit, and the scaling variable of the terminal unit.

The line unit includes one metal layer. Corresponding to a geometric layout of the line unit in FIG. 3, in a graph element of the line unit, the line unit includes one node. The node indicates that the line unit occupies one node in the circuit topology.

Corresponding to the geometric layout of the line unit in FIG. 3, a scaling variable of the line unit includes a length and a width of a seventh metal layer, and the like. The scaling variable of the line unit means scaling down or scaling up in a same proportion according to the scaling variable, so that the line unit is scaled down or scaled up as a whole, without changing a shape of the line unit.

Optionally, the scaling variable of the line unit may be classified into a scaling variable in the horizontal direction and a scaling variable in the vertical direction. The scaling variable in the horizontal direction represents a size of the metal layer in the horizontal direction, for example, a width of the seventh metal layer. The scaling variable in the vertical direction represents a size of the metal layer in the vertical direction, for example, a length of the seventh metal layer.

Therefore, the information about the basic layout unit, received by the processor 130 by using the transceiver 110, includes data such as a geometric layout structure of the line unit, the graph element of the line unit, and the scaling variable of the line unit.

In this application, sizes of metal layers in each type of basic layout unit may be associated with each other. For example, a size of the sixth metal layer in the terminal unit is the same as a size of the seventh metal layer in the line unit. For another example, sizes of the fourth metal layer and the fifth metal layer in the absorption unit are the same, and are the same as the size of the sixth metal layer in the terminal unit and sizes of other metal layers. Sizes of metal layers in each type of basic layout unit may not be associated. For example, sizes of metal layers in each basic layout unit are different, or even sizes of metal layers in the same type of basic layout unit are different. In a subsequent connection diagram generation process, a scaling-up or scaling-down operation needs to be performed according to the scaling variable. Therefore, there is no requirement on a size of a metal layer in each type of basic layout unit. Preferably, each type of basic layout unit exists with a minimum size.

In this embodiment of this application, before a scheme is designed for the substrate of the power module, the preprocessing module preprocesses the input parameters to obtain the geometric layout structures, graph elements, and scaling variables of the basic layout units that constitute the substrate of the power module, to provide a basis for subsequently constructing the connection diagram and optimizing a size of the designed substrate of the power module.

The connection diagram generation module 132 is configured to generate, based on a quantity N of switch units determined in the netlist of the input circuit topology, an orthogonal grid whose size does not exceed 2N × 2N, then randomly place graph elements of the switch units and absorption units in the grid, search for a connection path with a minimum commutation length based on the circuit topology by using an integer programming algorithm, set the path as an interconnection edge, set a path node as a line unit node, and finally output all non-empty nodes and interconnection edges as a layout template, to obtain the connection diagram of the substrate of the power module.

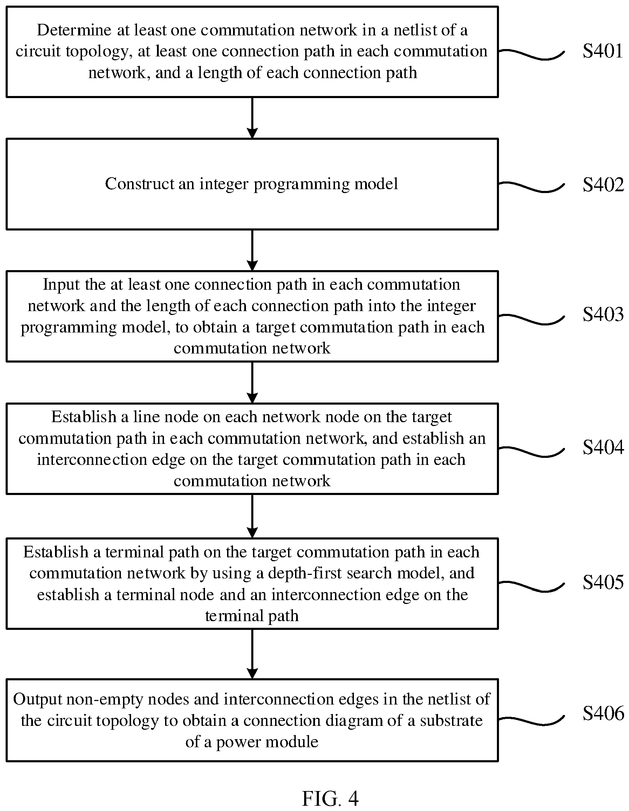

As shown in FIG. 4, if the netlist of the circuit topology includes the absorption unit, the connection diagram generation module 132 constructs the connection diagram of the substrate of the power module. A specific implementation process is as follows:

Step S401: Determine at least one commutation network in the netlist of the circuit topology, at least one connection path in each commutation network, and a length of each connection path. The commutation network refers to a network path between two nodes in the netlist of the circuit topology. Details are as follows:

Each commutation network defined in the netlist of the circuit topology refers to all K connection paths obtained for switch units and absorption units in any positions in the netlist of the circuit topology by using a depth-first search model, where the connection paths are paths between two nodes on which two ports of a same switch unit are located in the netlist, two nodes on which two ports of a same absorption unit are located in the netlist, two nodes on which one port of a switch unit and one port of another switch unit are located in the netlist, two nodes on which one port of an absorption unit and one port of another absorption unit are located in the netlist, and two nodes on which one port of a switch unit and one port of an absorption unit are located in the netlist. The depth-first search model refers to a storage unit, an electronic device, a cloud server, or the like that stores a depth-first search algorithm.

The connection paths are defined as integer variables $x_{net,1}$, ..., $x_{net,k}$, and a value range of each integer variable $x_{net,k}$ is:

$$x_{net,k} = \begin{cases} 1, & \text{The path is used} \\ 0, & \text{The path is not used} \end{cases} \tag{1}$$

In addition, lengths $l_{net,l}$, ..., $l_{net,k}$ of the connection paths $x_{net,k}$ are recorded.

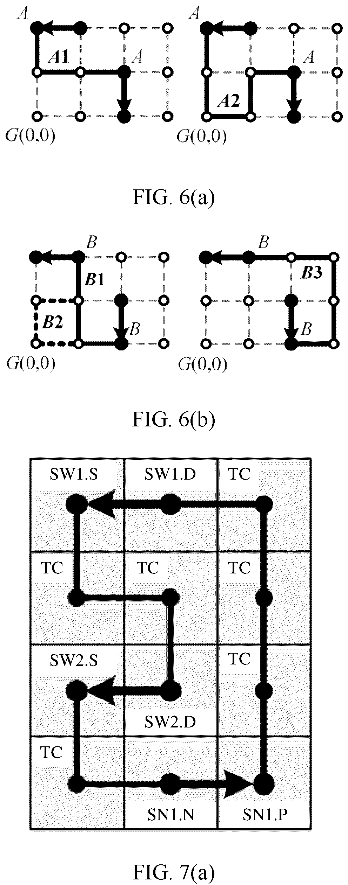

For example, as shown in FIG. 6(a), for a commutation network A in which coordinates of two selected nodes are G(1, 2) and G(2, 0), there may be two connection paths {A1, A2}. A path of the connection path A1 is: G(1, 2)→G(0, 2)→G(0, 1)→G(1, 1)→G(2, 1)→G(2, 0), and length $l_{net,A1}$ = 5. A path of the connection path A2 is: G(1, 2)→G(0, 2)→G(0, 1)→G(0, 0)→G(1, 0)→G(1, 1)→G(2, 1)→G(2, 0), and length $l_{net,A2}$ = 7.

For example, as shown in FIG. 6(b), for a commutation network B in which coordinates of two selected nodes are G(2, 1) and G(0, 2), there may be three connection paths {B1, B2, B3}. A path of the connection path B1 is: G(2, 1)→G(1, 0)→G(1, 1)→G(1, 2)→G(0, 2), and length $l_{net,B1}$ = 5. A path of the connection path B2 is: G(2, 1)→G(1, 0)→G(0, 0)→G(0, 1)→G(1, 1)→G(1, 2)→G(0, 2), and length $l_{net,B2}$ = 7. A path of the connection path B3 is: G(2, 1)→G(2, 0)→G(3, 0)→G(3, 1)→G(3, 2)→G(2, 2)→G(1, 2)→G(0, 2), and length $l_{net,B3}$ = 7.

In this application, the two nodes G(1, 2) and G(2, 0) in FIG. 6(a) may be two nodes on which two endpoints of a same switch unit are located in the netlist, two nodes on which two endpoints of a same absorption unit are located in the netlist, two nodes on which one endpoint of a switch unit and one endpoint of another switch unit are located in the netlist, two nodes on which one endpoint of an absorption unit and one endpoint of another absorption unit are located in the netlist, or even two nodes on which one endpoint of a switch unit and one endpoint of an absorption unit are located in the netlist. This is also true for the two nodes G(2, 1) and G(0, 2) in FIG. 6(b), and details are not described herein again.

Step S402: Construct an integer programming model. Integer programming is a type of linear programming. Linear programming in which a variable is limited to an integer is referred to as integer programming. The integer programming model refers to a storage unit, an electronic device, a cloud server, or the like that stores an integer programming algorithm.

Before the integer programming model is constructed, it is determined that an optimization objective is that a total path of the commutation network is shortest, that is,

$$\min. \sum_{net \in Netlist} l_{net,1} \cdot x_{net,1} + \ldots + l_{net,k} \cdot x_{net,k} \qquad (2)$$

Constraints for establishing the integer programming model are defined as follows:

① Only one path is allowed for each commutation network, that is,

$$\text{s.t.} \quad x_{net,1} + \ldots + x_{net,k} = 1, \forall net \in Netlist \qquad (3)$$

② Each grid node contains only one path, that is,

$$\text{s.t.} \quad \sum_{net \in Netlist} x_{net,1} + \ldots + x_{net,k} \leq 1,$$

$$\forall net, \text{where } k \text{ occupies a grid node } (i, j), 0 \leq i \leq W-1, 0 \leq j \leq H-1 \qquad (4)$$

where W is a width of a grid, and H is a height of the grid.

Then a linear programming model whose variable is an integer is trained based on the optimization objective, the constraint ①, and the constraint ②, so that the integer programming model is obtained. For example, FIG. 6(a) and FIG. 6(b) are still used as an example. For the constraint ①, it may be learned, based on the formula (3), that a constraint of the commutation network A is:

$$x_{A1} + x_{A2} = 1.$$

A constraint of the commutation network B is:

$$x_{B1} + x_{B2} + x_{B3} = 1.$$

For the constraint ②, it may be learned, based on the formula (4), that due to crossover of some nodes in the commutation network A and the commutation network B, a constraint of each node is:

$$G(0, 0): x_{A2} + x_{B2} \leq 1;$$

$$G(0, 1): x_{A2} + x_{B1} + x_{B2} \leq 1;$$

$$G(0, 2): x_B \leq 1;$$

$$G(0, 3): x_{B3} \leq 1;$$

$$G(1, 0): x_{A1} + x_{A2} + x_{B2} \leq 1;$$

$$G(1, 1)\colon x_{A1} + x_{A2} + x_{B1} + x_{B2} \leq 1;$$

$$G(1, 2)\colon x_A \leq 1;$$

$$G(1, 3)\colon x_{B3} \leq 1;$$

$$G(2, 0)\colon x_A \leq 1;$$

$$G(2, 1)\colon x_B \leq 1;$$

$$G(2, 2)\colon x_{B3} \leq 1;$$

and

$$G(2, 3)\colon x_{B3} \leq 1.$$

Step S403: Input the at least one connection path in each commutation network and the length of each connection path into the integer programming model, to obtain a target commutation path in each commutation network. The target commutation path is a shortest commutation path in each commutation network. Details are as follows:

FIG. 6(a) and FIG. 6(b) are still used as an example. For the commutation network A and the commutation network B, according to a principle that the optimization objective is "shortest path", the length $l_{net,A1}$ of the connection path A1 is less than the length $l_{net,A2}$ of the connection path A2 in the commutation network A. Therefore, a priority of the connection path A1 is higher than a priority of the connection path A2. Similarly, the length $l_{net,B1}$ of the connection path B1 is less than the length $l_{net,B2}$ of the connection path B2 in the commutation network B, and the length $l_{net,B1}$ of the connection path B1 is also less than the length $l_{net,B2}$ of the connection path B2. Therefore, a priority of the connection path B1 is higher than priorities of the connection path B2 and the connection path B3.

Then, based on the constraint ① and the constraint ②, it is determined whether the connection paths in the commutation network A and the connection paths in the commutation network B that are simultaneously selected meet the two constraints, and then the connection path A1 in the commutation network A and the connection path B1 in the commutation network B are selected as optimal commutation paths in the two commutation networks. Optionally, the connection path A1 in the commutation network A and the connection path B3 in the commutation network B may be selected as optimal commutation paths in the two commutation networks, or the connection path A2 in the commutation network A and the connection path B3 in the commutation network B may be selected as optimal commutation paths in the two commutation networks, or other paths are selected. This is not limited in this application.

Step S404: Establish a line node on each network node on the target commutation path in each commutation network, and establish an interconnection edge on the target commutation path in each commutation network. The line node is a node on which a line unit is disposed in the connection diagram.

The connection path A2 in the commutation network A in FIG. 6(a) is used as an example. After it is determined that the connection path A1 is an optimal commutation path in the commutation network A, because a connection relationship between nodes on the connection path A2 is G(1, 2)→G(0, 2)→G(0, 1)→G(0, 0)→G(1, 0)→G(1, 1)→G(2, 1)→G(2, 0), line units are established on nodes G(1, 2), G(0, 2), G(0, 1), G(0, 0), G(1, 0), G(1, 1), G(2, 1), and G(2, 0) respectively.

After the line units are established on the nodes on the optimal commutation path, an interconnection edge of each line unit is established. For example, a node G(1, 2) is used as an example. A node interconnected with the node is G(0, 2). Therefore, an interconnection edge of the node G(1, 2) is "G(1, 2)→G(0, 2)". Similarly, interconnection edges of the node G(0, 2) are "G(1, 2)→G(0, 2) " and "G(0, 2)→G(0, 1)". Other nodes are deduced by analogy.

The connection path B3 in the commutation network B in FIG. 6(b) is used as an example. After it is determined that the connection path B3 is an optimal commutation path in the commutation network B, because a connection relationship between nodes on the connection path B3 is G(2, 1)→G(2, 0)→G(3, 0)→G(3, 1)→G(3, 2)→G(2, 2)→G(1, 2)→G(0, 2), line units are established on nodes G(2, 1), G(2, 0), G(3, 0), G(3, 1), G(3, 2), G(2, 2), G(1, 2), and G(0, 2) respectively.

After the line units are established on the nodes on the optimal commutation path, an interconnection edge of each line unit is established. For example, a node G(2, 1) is used as an example. A node interconnected with the node is G(2, 0). Therefore, an interconnection edge of the node G(2, 1) is "G(2, 1)→G(2, 0)". Similarly, interconnection edges of the node G(2, 0) are "G(2, 1)→G(2, 0) " and "G(2, 0)→G(3, 0)". Other nodes are deduced by analogy.

Step S405: Establish a terminal path on the target commutation path in each commutation network by using the depth-first search model, and establish a terminal node and an interconnection edge on the terminal path. The terminal node is a node on which a terminal unit is disposed in the connection diagram.

Step S406: Output non-empty nodes and interconnection edges in the netlist of the circuit topology to obtain the connection diagram of the substrate of the power module.

The depth-first search (depth-first search, DFS) algorithm is one of search algorithms. A principle of the depth-first search algorithm is to traverse nodes of a tree along a depth of the tree and search for branches of the tree as deep as possible. When all edges of a node have been explored, the search backtraces to a start node of an edge on which the node is discovered. This process continues until all nodes that are reachable from a source node are discovered. If there are still undiscovered nodes, one of the nodes is selected as a source node and the foregoing process is repeated. The entire process is repeated until all nodes are accessed.

The connection path A2 in the commutation network A in FIG. 6(a) is still used as an example. After a line unit is established on each node of the connection path A2, a connection is established between an interconnection edge of each line node and an interconnection edge of an adjacent line node based on the depth-first search model constructed by the depth-first search algorithm, to establish a connection for each commutation path. For example, nodes adjacent to the node G(1, 2) include G(0, 2), G(1, 1), and G(2, 2), and nodes adjacent to the node G(0, 2) include G(0, 1) and G(1, 2). Therefore, the node G(1, 2) and the node G(0, 2) are nodes adjacent to each other, an interconnection edge of the node G(1, 2) is "G(1, 2)→G(0, 2)", and an interconnection edge of the node G(0, 2) is "G(1, 2)→G(0, 2)". Therefore, terminal units may be established in the node G(1, 2) and the node G(0, 2). The interconnection edge of the node G(1, 2) is connected to the interconnection edge of the node G(0, 2), so that interconnection edges of the terminal units are obtained. Other nodes are deduced by analogy.

The connection path B3 in the commutation network B in FIG. 6(b) is still used as an example. After a line unit is established on each node of the connection path B3, a connection is established between an interconnection edge of each line node and an interconnection edge of an adjacent line node based on the depth-first search model, to establish a connection for each commutation path. For example, nodes adjacent to the node G(2, 1) include G(2, 0), G(2, 2), G(1, 1), and G(3, 1), and nodes adjacent to the node G(2, 0) include G(2, 1), G(1, 0), and G(3, 0). Therefore, the node G(2, 1) and the node G(2, 0) are nodes adjacent to each other, an interconnection edge of the node G(2, 1) is "G(2, 1)→G(2, 0)", and an interconnection edge of the node G(2, 0) is "G(2, 1)→G(2, 0)". Therefore, terminal units may be established in the node G(2, 1) and the node G(2, 0). The interconnection edge of the node G(2, 1) is connected to the interconnection edge of the node G(2, 0), so that interconnection edges of the terminal units are obtained. Other nodes are deduced by analogy.

After a total commutation path is obtained by connecting the optimal commutation path in each commutation network, a node on which a port of each terminal unit is located in the netlist is connected to the total commutation path, so that a terminal path is obtained, and then a terminal node and an interconnection edge are established on the terminal path.

In this application, if the connection path A2 in the commutation network A and the connection path B3 in the commutation network B are used as optimal commutation paths in the two commutation networks, the constructed connection diagram of the substrate of the power module is a connection structure shown in FIG. 7(a). The connection diagram includes a switch node, an absorption node, a terminal node, and a line node. The switch node is a node on which the switch unit is disposed in the connection diagram, the absorption node is a node on which the absorption unit is disposed in the connection diagram, the terminal node is a node on which the terminal unit is disposed in the connection diagram, and the line node is a node on which the line unit is disposed in the connection diagram.

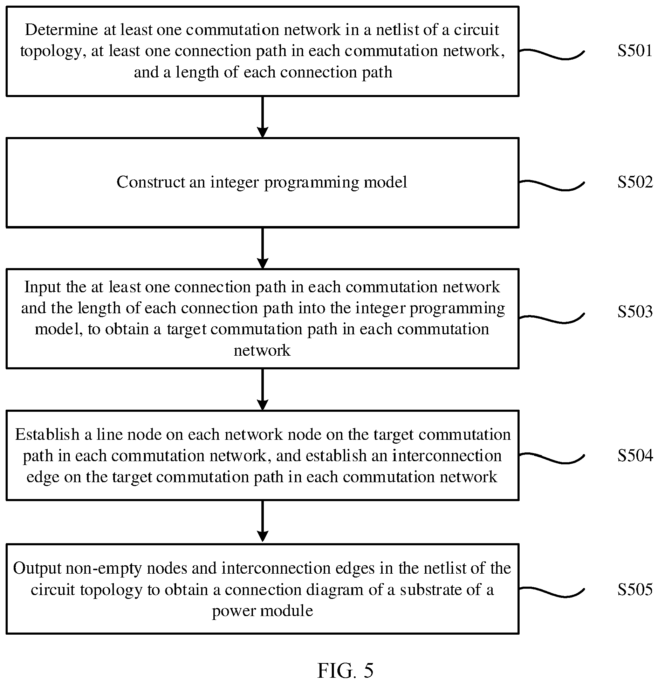

As shown in FIG. 5, if the netlist of the circuit topology does not include the absorption unit, the connection diagram generation module 132 constructs the connection diagram of the substrate of the power module. A specific implementation process is as follows:

Step S501: Determine at least one commutation network in the netlist of the circuit topology, at least one connection path in each commutation network, and a length of each connection path. The commutation network refers to a network path between two nodes in the netlist of the circuit topology. Details are as follows:

Each commutation network defined in the netlist of the circuit topology refers to all connection paths obtained for switch units and terminal units in any positions in the netlist of the circuit topology by using a depth-first search model constructed by a depth-first search algorithm, where the connection paths are paths between two nodes on which two ports of a same switch unit are located in the netlist, two nodes on which one port of a switch unit and one port of another switch unit are located in the netlist, two nodes on which one port of a terminal unit and one port of another terminal unit are located in the netlist, and two nodes on which one port of a switch unit and one port of a terminal unit are located in the netlist. In addition, a length of each connection path is recorded.

Step S502: Construct an integer programming model.

Before the integer programming model is established, it is determined that an optimization objective is that a total path of the commutation network is shortest. Constraints for establishing the integer programming model are defined as follows: ① Only one path is allowed for each commutation network. ② Each grid node contains only one path. Then a linear programming model whose variable is an integer is trained based on the optimization objective, the constraint ①, and the constraint ②, so that the integer programming model is obtained.

Step S503: Input the at least one connection path in each commutation network and the length of each connection path into the integer programming model, to obtain a target commutation path in each commutation network. The target commutation path is a shortest commutation path in each commutation network.

Step S504: Establish a line node on each network node on the target commutation path in each commutation network, and establish an interconnection edge on the target commutation path in each commutation network. The line node is a node on which a line unit is disposed in the connection diagram.

Step S505: Output non-empty nodes and interconnection edges in the netlist of the circuit topology to obtain the connection diagram of the substrate of the power module.

After a line unit is established on each node of the connection path, a connection is established between an interconnection edge of each line node and an interconnection edge of an adjacent line node based on the depth-first search model constructed by the depth-first search algorithm, to establish a connection for each commutation path.

In this embodiment of this application, the graph theory model defined for the basic layout units is used to describe relative positions of the basic layout units and a connection relationship between the basic layout units, then an optimal connection path in each commutation network in the circuit topology required for designing the substrate of the power module is determined by using the integer programming model, and a node and an interconnection edge of a line unit corresponding to each optimal connection path are established, so that the connection diagram is constructed. In this process, a substrate layout of the power module can be autonomously designed without depending on expert experience, and no input of a manual layout template is needed.

In this embodiment of this application, the graph theory model defined for the basic layout units is used to describe relative positions of the basic layout units and a connection relationship between the basic layout units, then an optimal connection path in each commutation network in the circuit topology required for designing the substrate of the power module is determined by using the integer programming model, and a node and an interconnection edge of a line unit corresponding to each optimal connection path are established, so that the connection diagram is constructed. In this process, a substrate layout of the power module can be autonomously designed without depending on expert experience, and no input of a manual layout template is needed.

The constraint graph generation module 133 is configured to determine an original size of each type of basic layout unit based on the design size constraints, that is, minimum sizes of the switch unit, the absorption unit, the terminal unit, and the line unit, and then scan, with reference to the scaling variable of each type of basic layout unit, the netlist of the circuit topology on which the connection diagram is located in the horizontal direction and the vertical direction, to obtain a size constraint graph in the horizontal direction and a size constraint graph in the vertical direction. A node in the size constraint graph represents a scanning line, an edge (an area between nodes) in the size constraint graph represents a size and a size constraint of a layout unit between scanning lines, there is at least one edge between adjacent nodes, and a minimum value constraint $w_{min,n}$ of each edge is determined by a layout unit with a maximum size between the scanning lines. Optionally, if an outer frame size constraint of the substrate is specified in the input parameters, a fixed edge is added between two outermost nodes, and a corresponding outer frame size constraint $w_{sum}$ is stored.

Regardless of the size constraint graph in the horizontal direction or the size constraint graph in the vertical direction, if a quantity of edges between adjacent nodes is $n_{edges}$, edges 1 to $n_{edges}-1$ are defined as independent variables, and an edge $n_{edges}$ is defined as a dependent variable. A value $w_n$ of an independent variable, where n , {1, 2, ..., $n_{edges}-1$}, needs to be greater than or equal to a minimum value constraint of a corresponding edge, that is, $w_n \geq w_{min,n}$. A value $w_n$ of the dependent variable, where n = $n_{edges}$, needs to meet both of the following two conditions: ① The value is greater than or equal to a minimum value constraint of the corresponding edge, that is, $w_n \geq w_{min,n}$. ② A sum of the value and the independent variable is equal to the outer frame size constraint, that is, $\sum w_n = w_{sum}$, where n $\in \{1, 2, ..., n_{edges}\}$.

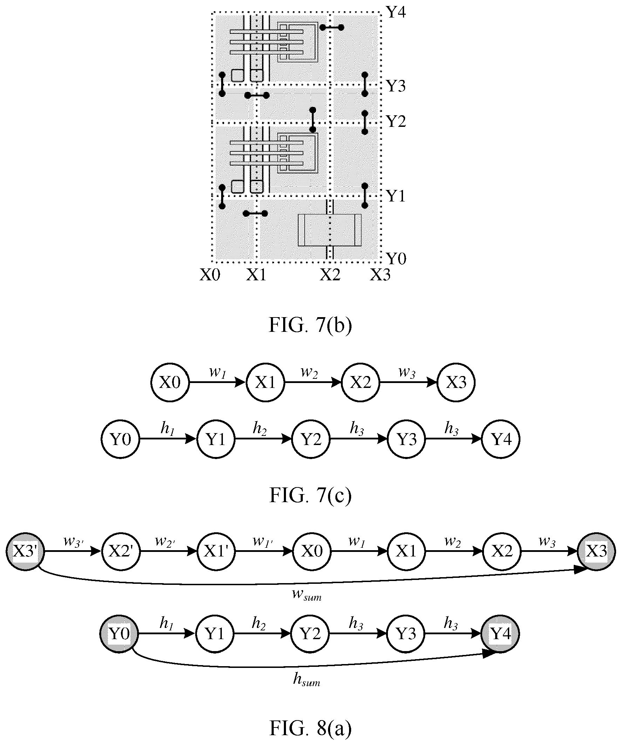

For example, based on the connection diagram shown in FIG. 7(a), a layout shown in FIG. 7(b) is generated, where the layout includes two switch units, one absorption unit, and six line units. The two switch units and one absorption unit are disposed according to connection lines in FIG. 7(a), and other positions are filled in with the six line units to form a complete layout, so that the shape is rectangular.

As shown in FIG. 7(c), in the size constraint graph in the horizontal direction, there are a node $X_0$, a node $X_1$, a node $X_2$, and a node $X_3$ from left to right, an edge $w_1$ exists between the node $X_0$ and the node $X_1$, an edge $w_2$ exists between the node $X_1$ and the node $X_2$, and an edge $w_3$ exists between the node $X_2$ and the node $X_3$. A width of the

edge $w_1$ is associated with a width of the metal layer in the line unit and a width of the metal layer in the switch unit. A width of the edge $w_2$ is associated with the width of the metal layer in the switch unit and a width of the metal layer in the absorption unit. A width of the edge $w_3$ is associated with the width of the metal layer in the absorption unit and the width of the metal layer in the line unit.

In the size constraint graph in the vertical direction, there are a node $Y_0$, a node $Y_1$, a node $Y_2$, a node $Y_3$, and a node $Y_4$ from bottom to top, an edge $h_1$ exists between the node $Y_0$ and the node $Y_1$, an edge $h_2$ exists between the node $Y_1$ and the node $Y_2$, an edge $h_3$ exists between the node $Y_2$ and the node $Y_3$, and an edge $h_4$ exists between the node $Y_3$ and the node $Y_4$. A length of the edge $h_1$ is associated with a length of the metal layer in the absorption unit and a length of the metal layer in the line unit. A length of the edge $h_2$ is associated with the length of the metal layer in the line unit and a length of the metal layer in the switch unit. A length of the edge $h_3$ is associated with the length of the metal layer in the line unit. A length of the edge $h_4$ is associated with the length of the metal layer in the line unit and the length of the metal layer in the switch unit.

In this embodiment of this application, the connection diagram is scanned in the horizontal direction and the vertical direction, so that the size constraint graph in the horizontal direction and the size constraint graph in the vertical direction of the connection diagram are obtained. Different sizes may be described by using the size constraint graph, and the size constraint graph includes size constraints. Therefore, quality of a generated substrate template of the power module is high, and no design rule check is required in a subsequent processing step.

The layout generation module 134 is configured to obtain a boundary size and a position of the layout based on a value of a side length of the size constraint graph, adjust a size of an internal line and a position of a component based on a defined scaling variable, and then combine metal layer lines in an interconnection layout by traversing interconnection edges in the connection diagram, to generate the substrate layout of the power module. For example, with reference to FIG. 7(b), based on the size constraint graphs in the horizontal direction and the vertical direction, an overall size of the layout shown in FIG. 7(b) may be adjusted, a size of an internal line may be adjusted, and a position of a component may be adjusted. Then metal layers on the basic layout units are electrically connected by using interconnection edges, so that a substrate design circuit diagram of the power module is obtained.

Optionally, the width of the edge $w_1$ is used as an example. The width of the edge $w_1$ is associated with the width of the metal layer in the line unit and the width of the metal layer in the switch unit, and the width of the seventh metal layer in the line unit may be randomly scaled down or scaled up based on the scaling variable of the line unit. A minimum value of the width of the second metal layer and the second metal layer in the switch unit needs to be greater than or equal to 1.0 mm, and a distance between the metal layers needs to be greater than 0.7 mm. Therefore, the width of the edge $w_1$ is at least above 2.2 mm. Other widths and lengths are deduced by analogy. This is not limited herein in this application.

In this application, the layout generation module 134 may further obtain, based on the size constraint graph shown in FIG. 7(c), a layout with a symmetric structure in a manner of mirror symmetry, translation, or the like. For example, mirror symmetry is performed on the size constraint graph in the horizontal direction shown in FIG. 7(c), and mirror symmetry processing is not performed on the size constraint graph in the vertical direction, to obtain a size constraint graph shown in FIG. 8(a). Mirror symmetry processing is performed on the size constraint graph in the horizontal direction, so that an obtained length $w_{sum}$ in the horizontal direction is twice a length in the horizontal direction shown in FIG. 7(c).

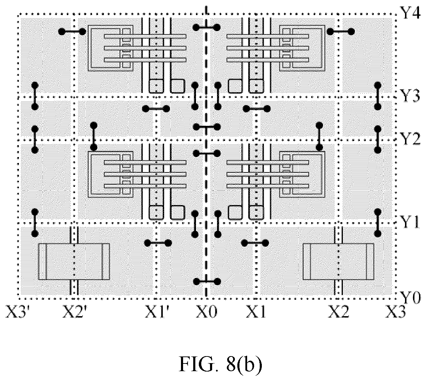

Then based on the size constraint graph shown in FIG. 8(a), the layout generation module 134 performs mirror symmetry processing on the layout shown in FIG. 7(b), to obtain a layout shown in FIG. 8(b), adjusts an overall size of the layout, adjusts a size of an internal line, adjusts a position of a component, and the like, and electrically connects the metal layers on the basic layout units by using the interconnection edges, to obtain a substrate design circuit diagram of the power module.

In this embodiment of this application, in a process of constructing the geometric layout of the substrate of the power module, a quantity of basic layout units and a position in which each basic layout unit is disposed may be determined by using the connection diagram, and a size of each basic layout unit may be limited by using the size constraint graph. In this way, the geometric layout of the substrate of the power module is constructed, and a size of the constructed geometric layout of the substrate of the power module is optimal.

The inductance evaluation module 135 is configured to compute, by using a layout evaluation tool, indicators such as parasitic inductance of a commutation loop of the layout, parasitic inductance of a chip branch in the switch unit, and thermal resistance of a chip in the switch unit, to determine performance of the designed geometric layout. The inductance evaluation has the following two features: 1. The commutation loop in the layout is defined as a layout line that starts from a positive electrode of the absorption capacitor, passes through a metal layer line and a power semiconductor chipset, and returns to a negative electrode of the absorption capacitor. 2. The chip branch in the switch unit is defined as a layout line that starts from a power semiconductor chip belonging to the same switch unit and returns to an electrode of the absorption capacitor.

For example, the inductance evaluation module 135 detects at least one of three indicators: parasitic inductance of the commutation loop in the geometric layout of the substrate of the power module that is generated by the layout generation module 134, parasitic inductance of the chip branch in the switch unit, and thermal resistance of the chip in the switch unit. When the parasitic inductance of the commutation loop in the geometric layout of the substrate of the power module is less than a first threshold, and/or the parasitic inductance of the chip branch in the switch unit is less than a second threshold, and/or the thermal resistance of the chip in the switch unit is less than a third threshold, the inductance evaluation module 135 outputs the geometric layout of the substrate of the power module. When the parasitic inductance of the commutation loop in the geometric layout of the substrate of the power module is not less than the first threshold, and/or the parasitic inductance of the chip branch in the switch unit is not less than the second threshold, and/or the thermal resistance of the chip in the switch unit is not less than the third threshold, the inductance evaluation module 135 reconstructs a geometric layout of the substrate of the power module, and may send an instruction to the connection diagram generation module 132 to regenerate a connection diagram, or may send an instruction to the constraint graph generation module 133 to regenerate a size constraint graph, or may send an instruction to the layout generation module 134 to regenerate a connection diagram of the substrate of the power module.

In this embodiment of this application, after the geometric layout of the substrate of the power module is constructed, quality of the geometric layout of the substrate of the power module needs to be detected based on indicators such as the parasitic inductance of the commutation loop, the parasitic inductance of the chip branch in the switch unit, and the thermal resistance of the chip in the switch unit. If the parasitic inductance of the commutation loop is low, or the parasitic inductance of the chip branch in the switch unit is low, or the thermal resistance of the chip in the switch unit is low, it indicates that detected performance of the geometric layout of the designed substrate of the power module is good. In the constructed geometric layout of the substrate of the power module, if the parasitic inductance of the commutation loop is high, or a parasitic inductance difference between chip branches in the switch unit is large, or the thermal resistance of the chip in the switch unit is low, it indicates that detected performance of the geometric layout of the designed substrate of the power module is poor, and that the substrate needs to be redesigned.

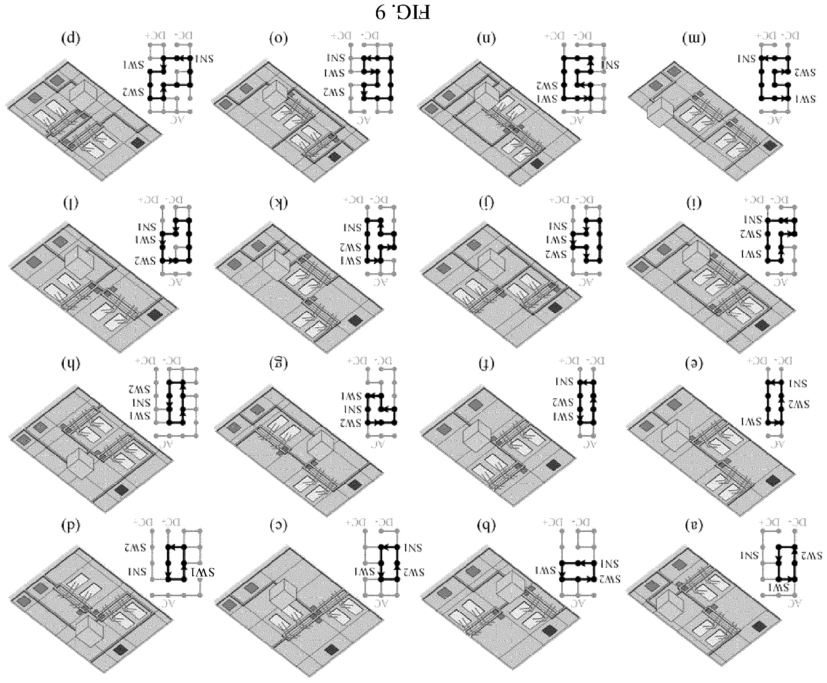

In this application, different layouts may be obtained by combining the commutation network A shown in FIG. 6(a) and the commutation network B shown in FIG. 6(b), and a designed layout of the substrate of the power module is not limited to the two layouts shown in FIG. 7(b) and FIG. 8(b), and may be another layout, for example, 16 connection diagram templates shown in FIG. 9 and corresponding layouts, and other layouts, which are not listed one by one in this application.

The optimization processing module 136 is configured to use a weight of an edge of the size constraint graph as a design variable, a minimum size of a basic layout unit, and a size of an outer frame of the substrate as design constraints, input the design constraints into a genetic computation model for optimization processing, and output an optimal layout of the substrate of the power module. The genetic computation model refers to a storage unit, an electronic device, a cloud server, or the like that stores a genetic algorithm.

The genetic algorithm is a search algorithm based on natural selection and a population genetic mechanism. The genetic algorithm simulates reproduction, hybridization, and mutation in natural selection and a natural genetic process. When the genetic algorithm is used to resolve a problem, each possible solution to the problem is encoded into a "chromosome", that is, an individual, and several individuals form a group (all possible solutions). At the beginning, the genetic algorithm usually randomly generates some individuals (that is, initial solutions), evaluates each individual based on a predetermined objective function, provides a fitness value, and based on the fitness value, selects some individuals to produce a next generation. The selection operation reflects a principle of "survival of the fittest". Good individuals are used to produce the next generation, and bad individuals are eliminated. Then the selected individuals are recombined by using crossover and mutation operators, to produce a new generation. Individuals in the new generation inherit some excellent characteristics of the previous generation, and therefore have better performance than the previous generation. In this way, gradual evolution toward an optimal solution is achieved. Therefore, the genetic algorithm may be considered as a process of preliminary evolution of a population including feasible solutions.

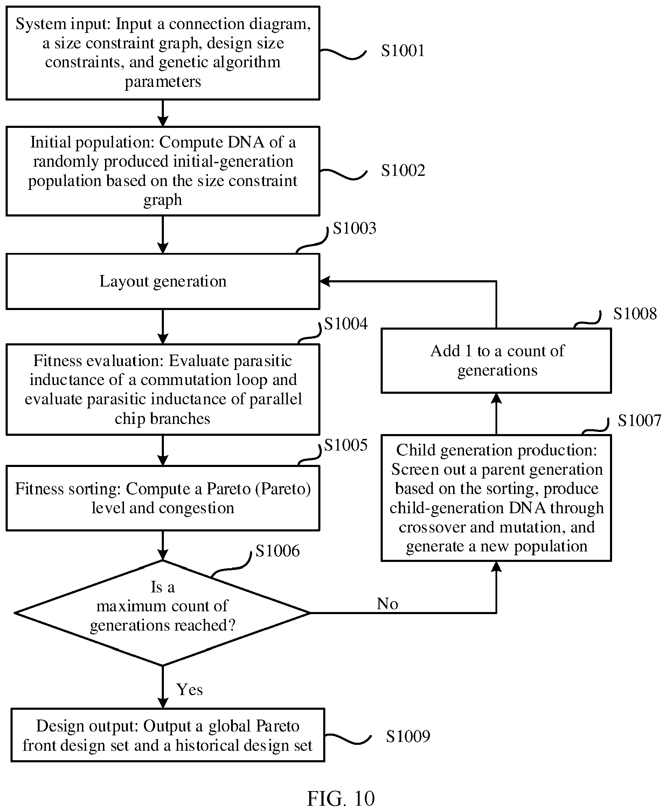

As shown in FIG. 10, a genetic computation unit 1343 performs iterative optimization. A specific implementation process is as follows:

Step S1001: System input: Input a connection diagram, a size constraint graph, design size constraints (or information about basic layout units), and genetic algorithm parameters, such as a population quantity, a count of iterative generations, and a crossover or mutation rate. An edge weight of the connection diagram is used as a design variable, and the minimum size of the basic layout unit and the size of the outer frame of the substrate of the power module are used as design constraints.

Step S1002: Initial population: Compute DNA of a randomly produced initial-generation population based on the size constraint graph. To be specific, length parameters of edges in a plurality of groups of size constraint graphs of $w_1$ to $w_n$ and $h_1$ to $h_m$ are randomly selected, where n represents a quantity of edges in the size constraint graph in the horizontal direction, and m represents a quantity of edges in the size constraint graph in the vertical direction.

Step S1003: Layout generation: Invoke the layout generation module 134, so that the layout generation module 134 generates corresponding groups of substrate layouts for the power module based on the length parameters of the edges in the plurality of groups of size constraint graphs of $w_1$ to $w_n$ and $h_1$ to $h_m$ selected in step S1002. A quantity of selected groups is related to a quantity of input populations.

Step S1004: Fitness evaluation: Evaluate parasitic inductance of the commutation loop and evaluate parasitic inductance of the chip branch in the switch unit. Specifically, the inductance evaluation module 135 is invoked, so that the inductance evaluation module 135 performs parasitic inductance evaluation on the plurality of groups of substrate layouts of the power module that are generated in step S1003, to obtain the parasitic inductance of the commutation loop and evaluate the parasitic inductance of the chip branch in the switch unit.

Step S1005: Fitness sorting: Compute a Pareto (Pareto) level and congestion. Specifically, commutation loops corresponding to each group of layouts are sorted based on minimum parasitic inductance and an evaluated minimum parasitic inductance difference between chip branches in the switch unit, and first M groups of layouts of commutation loops that have minimum parasitic inductance and an evaluated minimum parasitic inductance difference between chip branches in the switch unit are reserved.

Step S1006: Whether a maximum count of generations is reached: Determine whether the maximum count of generations is reached; and if the maximum count of generations is not reached, perform step S1007; or if the maximum count of generations is reached, perform step S1009.

Step S1007: Child generation production: Screen out a parent generation based on the sorting, produce child-generation DNA through crossover and mutation, and generate a new population. Specifically, length parameters of edges in size constraint graphs corresponding to the first M groups of layouts are modified, so that length parameters of edges in the M groups of size constraint graphs with different values are generated. Optionally, a length parameter of an edge in a size constraint graph is generally modified in one direction. For example, the length parameters of the edges in the M groups of size constraint graphs are increased, or the length parameters of the edges in the M groups of size constraint graphs are decreased. In addition, not all of $w_1$ to $w_n$ and $h_1$ to $h_m$ in each group are modified each time, but a part thereof may be modified.

Step S1008: Add 1 to the count of generations, and then perform step S1003.

Step S1009: Design output: Output a global Pareto front design set and a historical design set, that is, an optimal substrate layout of the power module.

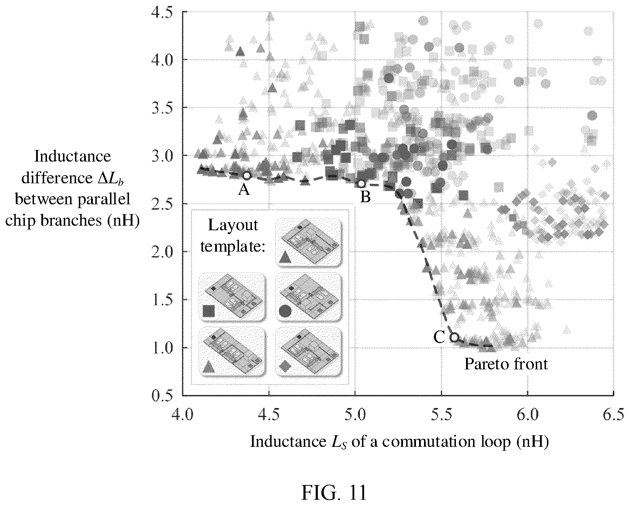

In this application, connection diagrams input into the genetic algorithm are 16 connection diagrams shown in FIG. 9, a quantity of selected initial-generation populations is 30, and the maximum count of generations is 50. Then iterative optimization is performed according to the steps shown in FIG. 10. All previous iteration results and a finally obtained Pareto front are shown in FIG. 11. A relationship between parasitic inductance of commutation loops corresponding to five different layouts and parasitic inductance of the chip branch in the switch unit is shown in FIG. 11.

In this embodiment of this application, after the geometric layout of the substrate of the power module is constructed, the geometric layout of the substrate of the power module may be input into the genetic computation model constructed by the genetic algorithm for optimal search by using minimum parasitic inductance of the commutation loop and the minimum parasitic inductance difference between chip branches in the switch unit as optimization objectives, a geometric layout of the substrate of the power module in two critical states in which parasitic inductance of the commutation loop is lowest and a parasitic inductance difference between chip branches in the switch unit is smallest is obtained as an optimal geometric layout, and then the geometric layout is output. In this way, the optimal geometric layout of the substrate of the power module is obtained.

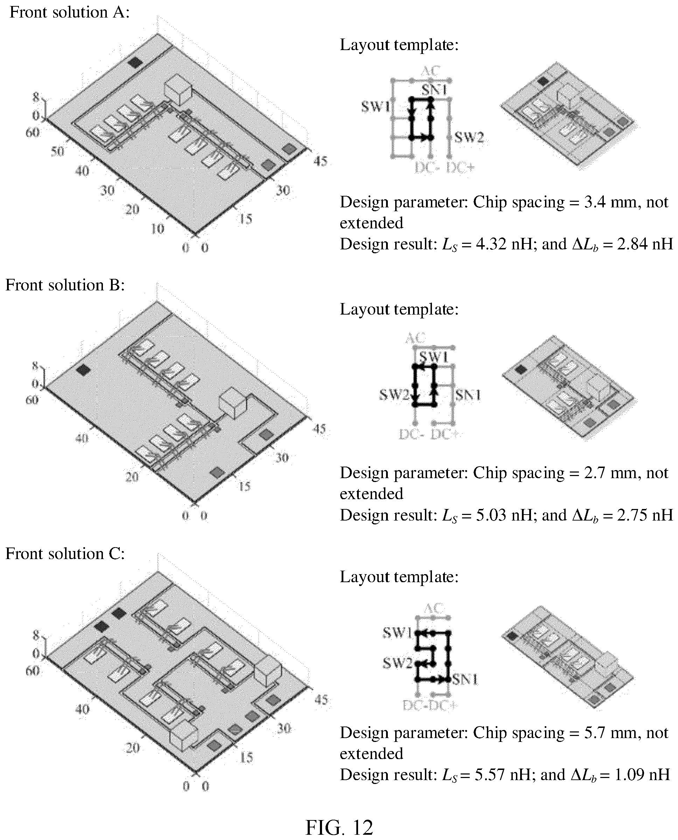

FIG. 12 shows layouts and design parameters of different solutions on a front trajectory. A front solution A is obtained by extending the layout in (d) in FIG. 9. A design parameter of the front solution A is: Chip spacing = 3.4 mm, not extended. A design result of the front solution A is: Parasitic inductance Ls in the commutation loop = 4.32 nH, and Parasitic inductance ΔLb of the chip branch in the switch unit = 2.84 nH. A front solution B is obtained by extending the layout in (a) in FIG. 9. A design parameter of the front solution B is: Chip spacing = 2.7 mm. A design result of the front solution B is: Ls = 5.03 nH, and ΔLb = 2.75 nH, not extended. A front solution C is obtained by extending the layout in (m) in FIG. 9. A design parameter of the front solution C is: Chip spacing = 5.7 mm. A design result of the front solution C is: Ls = 5.57 nH, and ΔLb = 1.09 nH, symmetrically extended.

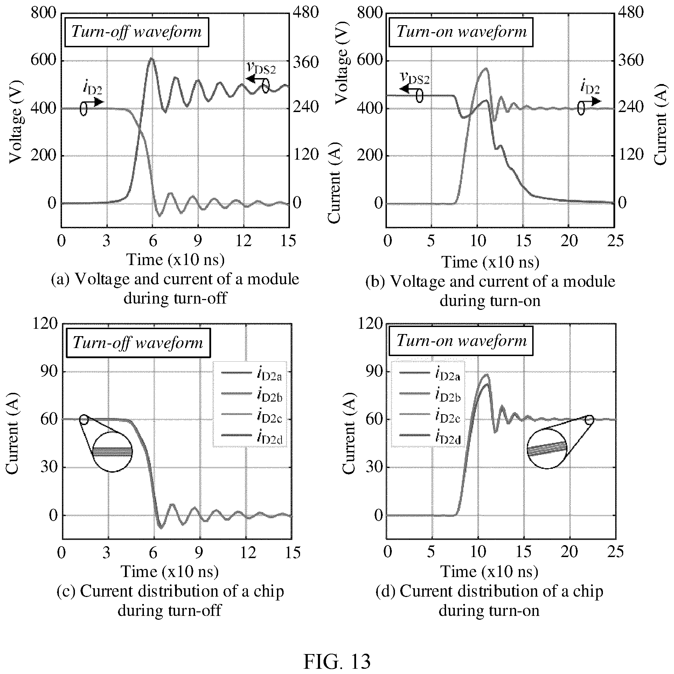

To verify whether the design scheme for the substrate of the power module designed in this application has an optimization effect, in this application, the front solution C is used for simulation verification. A switching waveform is shown in FIG. 13. Design indicators of the power module include a voltage peak in a turn-off process and current equalization in a turn-on or turn-off process. An evaluation result of the front solution C is shown herein. A voltage peak of the front solution C is small, and partial current equalization is achieved. In this way, effectiveness of the design scheme for the substrate of the power module designed in this application is verified.

In this embodiment of this application, by using the minimum parasitic inductance of the commutation loop and the minimum parasitic inductance difference between chip branches in the switch unit as optimization objectives, the genetic algorithm is used to optimize and compute a substrate layout of the power module. In this way, automation of a substrate layout design can be implemented, and performance is excellent.

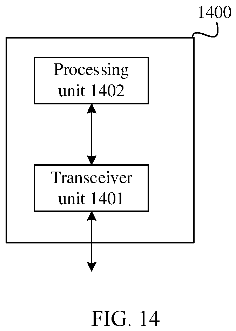

FIG. 14 is a schematic diagram of a framework of an apparatus for designing a substrate of a power module according to an embodiment of this application. FIG. 14 shows an apparatus for designing a substrate of a power module. The apparatus 1400 includes a transceiver unit 1401 and a processing unit 1402. Functions performed by each unit are specifically as follows:

In an implementation, the transceiver unit 1401 is configured to obtain input parameters for designing the substrate of the power module, where the input parameters include information about a circuit topology required for designing the substrate of the power module; and the processing unit 1402 is configured to: determine types of basic layout units and a quantity of basic layout units of each type in the circuit topology based on the information about the circuit topology and a prestored diagram of a structure of each type of basic layout unit, where the basic layout units are minimum units that constitute a geometric layout of the substrate of the power unit, and connect, by using a pathfinding model, a connection path of graph elements of each basic layout unit in the circuit topology, to obtain a connection diagram of the substrate of the power module, where the graph elements are prestored nodes and interconnection edges of the basic layout unit that constitute the connection diagram in the circuit topology, and the connection path is a path between two nodes in graph elements of one basic layout unit or a path between one node in graph elements of one basic layout unit and one node in graph elements of another basic layout unit.

In an implementation, the processing unit 1402 is specifically configured to: generate a netlist of the circuit topology based on the information about the circuit topology; and compute types of basic layout units and a quantity of basic layout units of each type in the netlist of the circuit topology based on the prestored diagram of the structure of each type of basic layout unit, where the types of the basic layout units include a switch unit, an absorption unit, a terminal unit, and a line unit.

In an implementation, the pathfinding model is at least one of an integer programming model and a depth-first search model.

In an implementation, the processing unit 1402 is specifically configured to: determine at least one commutation network in the netlist of the circuit topology, at least one connection path in each commutation network, and a length of each connection path, where the commutation network refers to a network path between two nodes in the netlist of the circuit topology, and the two nodes are two nodes on which two ports of a switch unit are located, and/or two nodes on which two ports of an absorption unit are located, and/or two nodes on which one port of a switch unit and one port of another switch unit are located, and/or two nodes on which one port of an absorption unit and one port of another absorption unit are located, and/or two nodes on which one port of a switch unit and one port of an absorption unit are located; train a linear programming model based on an optimization objective, a constraint of the commutation network, and a constraint of a node on the commutation network, and construct the integer programming model; input the at least one connection path in each commutation network and the length of each connection path into the integer programming model, to obtain a target commutation path in each commutation network, where the target commutation path is a commutation path that is in each commutation network and that meets a specified length threshold; establish a line node on each network node on the target commutation path in each commutation network, and establish an interconnection edge on the target commutation path in each commutation network, where the line node is a node on which a line unit is disposed; establish a terminal path on the target commutation path in each commutation network by using the depth-first search model, and establish a terminal node and an interconnection edge on the terminal path, where the terminal path is a path for connecting a terminal unit to the commutation network, and the terminal node is a node on which the terminal unit is disposed; and output non-empty nodes and interconnection edges in the netlist of the circuit topology to obtain the connection diagram of the substrate of the power module.

In an implementation, the processing unit 1402 is specifically configured to: determine at least one commutation network in the netlist of the circuit topology, at least one connection path in each commutation network, and a length of each connection path, where the commutation network refers to a network path between two nodes in the netlist of the circuit topology, and the two nodes are two nodes on which two ports of a switch unit are located, and/or two nodes on which one port of a switch unit and one port of another switch unit are located, and/or two nodes on which one port of a terminal unit and one port of another terminal unit are located, and/or two nodes on which one port of a switch unit and one port of a terminal unit are located; train a linear programming model based on an optimization objective, a constraint of the commutation network, and a constraint of a node on the commutation network, and construct the integer programming model; input the at least one connection path in each commutation network and the length of each connection path into the integer programming model, to obtain a target commutation path in each commutation network, where the target commutation path is a commutation path that is in each commutation network and that meets a specified length threshold; establish a line node on each network node on the target commutation path in each commutation network, and establish an interconnection edge on the target commutation path in each commutation network, where the line node is a node on which a line unit is disposed; and output non-empty nodes and interconnection edges in the netlist of the circuit topology to obtain the connection diagram of the substrate of the power module.

In an implementation, the input parameters further include design size constraints of the basic layout units; and the processing unit 1402 is further configured to determine an original size of each type of basic layout unit based on the design size constraints; and scan the connection diagram of the substrate of the power module based on the original size of each type of basic layout unit and a prestored scaling variable of each type of basic layout unit, to obtain a size constraint graph of the connection diagram, where the size constraint graph is used to limit a size of each basic layout unit when the geometric layout is constructed based on the connection diagram

In an implementation, the processing unit 1402 is specifically configured to: scan the connection diagram of the substrate of the power module along a first direction, to obtain a size constraint graph of the connection diagram in the first direction; and scan the connection diagram of the substrate of the power module along a second direction, to obtain a size constraint graph of the connection diagram in the second direction, where the first direction and the second direction are directions perpendicular to each other.

In an implementation, the size constraint graph includes a constraint node and a constraint edge, the constraint node is a scanning line for scanning the connection diagram of the substrate of the power module, and the constraint edge is a distance between scanning lines and is used to constrain the size of each basic layout unit.

In an implementation, the processing unit 1402 is further configured to: construct the geometric layout of the substrate of the power module based on the connection diagram of the substrate of the power module and the size constraint graph of the connection diagram

In an implementation, the processing unit 1402 is further configured to: detect parasitic inductance of a commutation loop in the geometric layout of the substrate of the power module, and/or parasitic inductance of a chip branch in a switch unit, and/or thermal resistance of a chip in a switch unit; $_{and}$ output the geometric layout of the substrate of the power module when the parasitic inductance of the commutation loop in the geometric layout of the substrate of the power module is less than a first threshold, and/or the parasitic inductance of the chip branch in the switch unit is less than a second threshold, and/or the thermal resistance of the chip in the switch unit is less than a third threshold

In an implementation, the processing unit 1402 is further configured to: reconstruct the geometric layout of the substrate of the power module when the parasitic inductance of the commutation loop in the geometric layout of the substrate of the power module is not less than the first threshold, and/or the parasitic inductance of the chip branch in the switch unit is not less than the second threshold, and/or the thermal resistance of the chip in the switch unit is not less than the third threshold.

In an implementation, the processing unit 1402 is further configured to: input the geometric layout of the substrate of the power module into a genetic computation model, and output a target geometric layout, where the target geometric layout is a geometric layout of the substrate of the power module that meets a specified condition, and the specified condition is reducing a parasitic inductance value of the commutation loop, and/or reducing a parasitic inductance difference between chip branches in the switch unit, and/or reducing the thermal resistance of the chip in the switch unit to a Pareto optimal front.

According to a third aspect, an embodiment of this application provides a terminal device, including at least one transceiver, at least one memory, and at least one processor. The processor is configured to execute instructions stored in the memory, so that the terminal device performs the foregoing protected technical solutions corresponding to FIG. 1 to FIG. 13, and that the terminal device has technical effects of the foregoing protected technical solutions.

An embodiment of this application further provides a computer-readable storage medium. The computer-readable storage medium stores a computer program. When the computer program is executed on a computer, the computer is enabled to perform any method described in FIG. 1 to FIG. 13 and corresponding description content.

An embodiment of this application further provides a computer program product. The computer program product stores instructions. When the instructions are executed on a computer, the computer is enabled to implement any method described in FIG. 1 to FIG. 13 and corresponding description content.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry an instruction and/or data.

In the foregoing embodiments, the apparatus 1400 for designing a substrate of a power module in FIG. 14 may be implemented completely or partially by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

When the functions are implemented in a form of a software functional unit and sold or used as a separate product, the functions may be stored in a computer-readable storage medium. Based on such an understanding, the technical solutions of the embodiments of this application essentially, or the part contributing to the prior art, or some of the technical solutions may be implemented in a form of a software product. The computer software product is stored in a storage medium, and includes several instructions for instructing a computer device (which may be a personal computer, a server, an access network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of the embodiments of this application, but the protection scope of the embodiments of this application is not limited thereto. Any variation or replacement readily figured out by a person skilled in the art within the technical scope disclosed in the embodiments of this application shall fall within the protection scope of the embodiments of this application.

## Claims

1. A method for designing a substrate of a power module, comprising:

obtaining input parameters for designing the substrate of the power module, wherein the input parameters comprise information about a circuit topology required for designing the substrate of the power module;
determining types of basic layout units and a quantity of basic layout units of each type in the circuit topology based on the information about the circuit topology and a prestored diagram of a structure of each type of basic layout unit, wherein the basic layout units are minimum units that constitute a geometric layout of the substrate of the power unit; and

connecting, by using a pathfinding model, a connection path of graph elements of each basic layout unit in the circuit topology, to obtain a connection diagram of the substrate of the power module, wherein the graph elements are prestored nodes and interconnection edges of the basic layout unit that constitute the connection diagram in the circuit topology, and the connection path is a path between two nodes in graph elements of one basic layout unit or a path between one node in graph elements of one basic layout unit and one node in graph elements of another basic layout unit.

2. The method according to claim 1, wherein the determining types of basic layout units and a quantity of basic layout units of each type in the circuit topology based on the information about the circuit topology and a prestored diagram of a structure of each type of basic layout unit specifically comprises:

generating a netlist of the circuit topology based on the information about the circuit topology; and computing types of basic layout units and a quantity of basic layout units of each type in the netlist of the circuit topology based on the prestored diagram of the structure of each type of basic layout unit, wherein the types of the basic layout units comprise a switch unit, an absorption unit, a terminal unit, and a line unit.

3. The method according to claim 1 or 2, wherein the pathfinding model is at least one of an integer programming model and a depth-first search model.

4. The method according to any one of claims 1 to 3, wherein the connecting, by using a pathfinding model, a connection path of graph elements of each basic layout unit in the circuit topology, to obtain a connection diagram of the substrate of the power module specifically comprises:

determining at least one commutation network in the netlist of the circuit topology, at least one connection path in each commutation network, and a length of each connection path, wherein the commutation network refers to a network path between two nodes in the netlist of the circuit topology, and the two nodes are two nodes on which two ports of a switch unit are located, and/or two nodes on which two ports of an absorption unit are located, and/or two nodes on which one port of a switch unit and one port of another switch unit are located, and/or two nodes on which one port of an absorption unit and one port of another absorption unit are located, and/or two nodes on which one port of a switch unit and one port of an absorption unit are located; training a linear programming model based on an optimization objective, a constraint of the commutation network, and a constraint of a node on the commutation network, and constructing the integer programming model; inputting the at least one connection path in each commutation network and the length of each connection path into the integer programming model, to obtain a target commutation path in each commutation network, wherein the target commutation path is a commutation path that is in each commutation network and that meets a specified length threshold; establishing a line node on each network node on the target commutation path in each commutation network, and establishing an interconnection edge on the target commutation path in each commutation network, wherein the line node is a node on which a line unit is disposed; establishing a terminal path on the target commutation path in each commutation network by using the depth-first search model, and establishing a terminal node and an interconnection edge on the terminal path, wherein the terminal path is a path for connecting a terminal unit to the commutation network, and the terminal node is a node on which the terminal unit is disposed; and outputting non-empty nodes and interconnection edges in the netlist of the circuit topology to obtain the connection diagram of the substrate of the power module.

5. The method according to any one of claims 1 to 3, wherein the connecting, by using a pathfinding model, a connection path of graph elements of each basic layout unit in the circuit topology, to obtain a connection diagram of the substrate of the power module specifically comprises:

determining at least one commutation network in the netlist of the circuit topology, at least one connection path in each commutation network, and a length of each connection path, wherein the commutation network refers to a network path between two nodes in the netlist of the circuit topology, and the two nodes are two nodes on which two ports of a switch unit are located, and/or two nodes on which one port of a switch unit and one port of another switch unit are located, and/or two nodes on which one port of a terminal unit and one port of another terminal unit are located, and/or two nodes on which one port of a switch unit and one port of a terminal unit are located; training a linear programming model based on an optimization objective, a constraint of the commutation network, and a constraint of a node on the commutation network, and constructing the integer programming model;

inputting the at least one connection path in each commutation network and the length of each connection path into the integer programming model, to obtain a target commutation path in each commutation network, wherein the target commutation path is a commutation path that is in each commutation network and that meets a specified length threshold;

establishing a line node on each network node on the target commutation path in each commutation network, and establishing an interconnection edge on the target commutation path in each commutation network, wherein the line node is a node on which a line unit is disposed; and

outputting non-empty nodes and interconnection edges in the netlist of the circuit topology to obtain the connection diagram of the substrate of the power module.

6. The method according to any one of claims 1 to 5, wherein the input parameters further comprise design size constraints of the basic layout units; and

the method further comprises:

determining an original size of each type of basic layout unit based on the design size constraints; and

scanning the connection diagram of the substrate of the power module based on the original size of each type of basic layout unit and a prestored scaling variable of each type of basic layout unit, to obtain a size constraint graph of the connection diagram, wherein the size constraint graph is used to limit a size of each basic layout unit when the geometric layout is constructed based on the connection diagram.

7. The method according to claim 6, wherein the scanning the connection diagram of the substrate of the power module to obtain a size constraint graph of the connection diagram specifically comprises:

scanning the connection diagram of the substrate of the power module along a first direction, to obtain a size constraint graph of the connection diagram in the first direction; and

scanning the connection diagram of the substrate of the power module along a second direction, to obtain a size constraint graph of the connection diagram in the second direction, wherein the first direction and the second direction are directions perpendicular to each other.

8. The method according to claim 6 or 7, wherein the size constraint graph comprises a constraint node and a constraint edge, the constraint node is a scanning line for scanning the connection diagram of the substrate of the power module, and the constraint edge is a distance between scanning lines and is used to constrain the size of each basic layout unit.

9. The method according to any one of claims 1 to 8, wherein the method further comprises:
constructing the geometric layout of the substrate of the power module based on the connection diagram of the substrate of the power module and the size constraint graph of the connection diagram.

10. The method according to claim 9, wherein the method further comprises:

detecting parasitic inductance of a commutation loop in the geometric layout of the substrate of the power module, and/or parasitic inductance of a chip branch in a switch unit, and/or thermal resistance of a chip in a switch unit; and

outputting the geometric layout of the substrate of the power module when the parasitic inductance of the commutation loop in the geometric layout of the substrate of the power module is less than a first threshold, and/or the parasitic inductance of the chip branch in the switch unit is less than a second threshold, and/or the thermal resistance of the chip in the switch unit is less than a third threshold.

11. The method according to claim 10, wherein the method further comprises:
reconstructing a geometric layout of the substrate of the power module when the parasitic inductance of the commutation loop in the geometric layout of the substrate of the power module is not less than the first threshold, and/or the parasitic inductance of the chip branch in the switch unit is not less than the second threshold, and/or the thermal resistance of the chip in the switch unit is not less than the third threshold.

12. The method according to any one of claims 9 to 11, further comprising:
inputting the geometric layout of the substrate of the power module into a genetic computation model, and outputting a target geometric layout, wherein the target geometric layout is a geometric layout of the substrate of the power module that meets a specified condition, and the specified condition is reducing a parasitic inductance value of the commutation loop, and/or reducing a parasitic inductance difference between chip branches in the switch unit, and/or reducing the thermal resistance of the chip in the switch unit to reach a Pareto optimal front.

13. An apparatus for designing a substrate of a power module, comprising:

a transceiver unit, configured to obtain input parameters for designing the substrate of the power module, wherein the input parameters comprise information about a circuit topology required for designing the substrate of the power module; and

a processing unit, configured to: determine types of basic layout units and a quantity of basic layout units of each type in the circuit topology based on the information about the circuit topology and a prestored diagram of a structure of each type of basic layout unit, wherein the basic layout units are minimum units that constitute a geometric layout of the substrate of the power unit; and

connect, by using a pathfinding model, a connection path of graph elements of each basic layout unit in the circuit topology, to obtain a connection diagram of the substrate of the power module, wherein the graph elements are prestored nodes and interconnection edges of the basic layout unit that constitute the connection diagram in the circuit topology, and the connection path is a path between two nodes in graph elements of one basic layout unit or a path between one node in graph elements of one basic layout unit and one node in graph elements of another basic layout unit.

14. The apparatus according to claim 13, wherein the processing unit is specifically configured to:

generate a netlist of the circuit topology based on the information about the circuit topology; and

compute types of basic layout units and a quantity of basic layout units of each type in the netlist of the circuit topology based on the prestored diagram of the structure of each type of basic layout unit, wherein the types of the basic layout units comprise a switch unit, an absorption unit, a terminal unit, and a line unit.

15. The apparatus according to claim 13 or 14, wherein the pathfinding model is at least one of an integer programming model and a depth-first search model.

16. The apparatus according to any one of claims 13 to 15, wherein the processing unit is specifically configured to:

determine at least one commutation network in the netlist of the circuit topology, at least one connection path in each commutation network, and a length of each connection path, wherein the commutation network refers to a network path between two nodes in the netlist of the circuit topology, and the two nodes are two nodes on which two ports of a switch unit are located, and/or two nodes on which two ports of an absorption unit are located, and/or two nodes on which one port of a switch unit and one port of another switch unit are located, and/or two nodes on which one port of an absorption unit and one port of another absorption unit are located, and/or two nodes on which one port of a switch unit and one port of an absorption unit are located;

train a linear programming model based on an optimization objective, a constraint of the commutation network, and a constraint of a node on the commutation network, and construct the integer programming model;

input the at least one connection path in each commutation network and the length of each connection path into the integer programming model, to obtain a target commutation path in each commutation network, wherein the target commutation path is a commutation path that is in each commutation network and that meets a specified length threshold;

establish a line node on each network node on the target commutation path in each commutation network, and establish an interconnection edge on the target commutation path in each commutation network, wherein the line node is a node on which a line unit is disposed;

establish a terminal path on the target commutation path in each commutation network by using the depth-first search model, and establish a terminal node and an interconnection edge on the terminal path, wherein the terminal path is a path for connecting a terminal unit to the commutation network, and the terminal node is a node on which the terminal unit is disposed; and

output non-empty nodes and interconnection edges in the netlist of the circuit topology to obtain the connection diagram of the substrate of the power module.

17. The apparatus according to any one of claims 13 to 15, wherein the processing unit is specifically configured to:

determine at least one commutation network in the netlist of the circuit topology, at least one connection path in each commutation network, and a length of each connection path, wherein the commutation network refers to a network path between two nodes in the netlist of the circuit topology, and the two nodes are two nodes on which two ports of a switch unit are located, and/or two nodes on which one port of a switch unit and one port of another switch unit are located, and/or two nodes on which one port of a terminal unit and one port of another terminal unit are located, and/or two nodes on which one port of a switch unit and one port of a terminal unit are located;

train a linear programming model based on an optimization objective, a constraint of the commutation network, and a constraint of a node on the commutation network, and construct the integer programming model;

input the at least one connection path in each commutation network and the length of each connection path into the integer programming model, to obtain a target commutation path in each commutation network, wherein the target commutation path is a commutation path that is in each commutation network and that meets a specified length threshold;

establish a line node on each network node on the target commutation path in each commutation network, and establish an interconnection edge on the target commutation path in each commutation network; and

output non-empty nodes and interconnection edges in the netlist of the circuit topology to obtain the connection diagram of the substrate of the power module.

18. The apparatus according to any one of claims 13 to 17, wherein the input parameters further comprise design size constraints of the basic layout units; and

the processing unit is further configured to determine an original size of each type of basic layout unit based on the design size constraints; and

scan the connection diagram of the substrate of the power module based on the original size of each type of basic layout unit and a prestored scaling variable of each type of basic layout unit, to obtain a size constraint graph of the connection diagram, wherein the size constraint graph is used to limit a size of each basic layout unit when the geometric layout is constructed based on the connection diagram.

19. The apparatus according to claim 18, wherein the processing unit is specifically configured to:

scan the connection diagram of the substrate of the power module along a first direction, to obtain a size constraint graph of the connection diagram in the first direction; and

scan the connection diagram of the substrate of the power module along a second direction, to obtain a size constraint graph of the connection diagram in the second direction, wherein the first direction and the second direction are directions perpendicular to each other.

20. The apparatus according to claim 18 or 19, wherein the size constraint graph comprises a constraint node and a constraint edge, the constraint node is a scanning line for scanning the connection diagram of the substrate of the power module, and the constraint edge is a distance between scanning lines and is used to constrain the size of each basic layout unit.

21. The apparatus according to any one of claims 13 to 20, wherein the processing unit is further configured to:
construct the geometric layout of the substrate of the power module based on the connection diagram of the substrate of the power module and the size constraint graph of the connection diagram.

22. The apparatus according to claim 21, wherein the processing unit is further configured to:

detect parasitic inductance of a commutation loop in the geometric layout of the substrate of the power module, and/or parasitic inductance of a chip branch in a switch unit, and/or thermal resistance of a chip in a switch unit; and

output the geometric layout of the substrate of the power module when the parasitic inductance of the commutation loop in the geometric layout of the substrate of the power module is less than a first threshold, and/or the parasitic inductance of the chip branch in the switch unit is less than a second threshold, and/or the thermal resistance of the chip in the switch unit is less than a third threshold.

23. The apparatus according to claim 22, wherein the processing unit is further configured to:
reconstruct a geometric layout of the substrate of the power module when the parasitic inductance of the commutation loop in the geometric layout of the substrate of the power module is not less than the first threshold, and/or the parasitic inductance of the chip branch in the switch unit is not less than the second threshold, and/or the thermal resistance of the chip in the switch unit is not less than the third threshold.

**24.** The apparatus according to any one of claims 21 to 23, wherein the processing unit is further configured to: input the geometric layout of the substrate of the power module into a genetic computation model, and output a target geometric layout, wherein the target geometric layout is a geometric layout of the substrate of the power module that meets a specified condition, and the specified condition is reducing a parasitic inductance value of the commutation loop, and/or reducing a parasitic inductance difference between chip branches in the switch unit, and/or reducing the thermal resistance of the chip in the switch unit to a Pareto optimal front.

**25.** A terminal device, comprising:

at least one transceiver;
at least one memory; and
at least one processor, wherein the processor is configured to execute instructions stored in the memory, so that the terminal device performs the method for designing a substrate of a power module according to claims 1 to 12.

**26.** A computing device, comprising a memory and a processor, wherein the memory is configured to store instructions, and the processor is configured to invoke the instructions stored in the memory, to implement the method for designing a substrate of a power module according to any one of claims 1 to 12.

**27.** A computer-readable storage medium, wherein the computer-readable storage medium stores a computer program, and when the computer program is executed on a computer, the computer is enabled to perform the method according to any one of claims 1 to 12.

**28.** A computer program product, wherein the computer program product stores instructions, and when the instructions are executed on a computer, the computer is enabled to implement the method according to any one of claims 1 to 12.

Terminal device 100

Transceiver
110

Bus 140

Memory
120

Processor
130

FIG. 1

Processor 130

Input
parameters

Parameter
preprocessing
module 131

Connection
diagram
generation
module 132

Size constraint
graph
generation
module 133

Layout
generation
module 134

Output a
geometric
layout

Target
evaluation
module 135

Output a
geometric
layout

Optimization
processing
module 136

Output a
geometric
layout

FIG. 2

| Name | Geometric layout | Graph element | Scaling variable |
|---|---|---|---|
| Switch unit | Power semiconductor chip<br>First metal layer<br>Second metal layer<br>Interconnection line structure  Third metal layer | Switch unit<br><br>Empty node | Chip spacing: Length and width of the metal layer |
| Absorption unit | Absorption capacitor<br>Fourth metal layer<br>Fifth metal layer | Absorption unit<br><br>Empty node | Length and width of the metal layer |
| Terminal unit | Output terminal<br>Sixth metal layer | Terminal unit<br><br>Empty node | Length and width of the metal layer |
| Line unit | Seventh metal layer | Line unit<br><br>Empty node | Length and width of the metal layer |

FIG. 3

Determine at least one commutation network in a netlist of a circuit topology, at least one connection path in each commutation network, and a length of each connection path — S401

Construct an integer programming model — S402

Input the at least one connection path in each commutation network and the length of each connection path into the integer programming model, to obtain a target commutation path in each commutation network — S403

Establish a line node on each network node on the target commutation path in each commutation network, and establish an interconnection edge on the target commutation path in each commutation network — S404

Establish a terminal path on the target commutation path in each commutation network by using a depth-first search model, and establish a terminal node and an interconnection edge on the terminal path — S405

Output non-empty nodes and interconnection edges in the netlist of the circuit topology to obtain a connection diagram of a substrate of a power module — S406

FIG. 4

Determine at least one commutation network in a netlist of a circuit topology, at least one connection path in each commutation network, and a length of each connection path — S501

Construct an integer programming model — S502

Input the at least one connection path in each commutation network and the length of each connection path into the integer programming model, to obtain a target commutation path in each commutation network — S503

Establish a line node on each network node on the target commutation path in each commutation network, and establish an interconnection edge on the target commutation path in each commutation network — S504

Output non-empty nodes and interconnection edges in the netlist of the circuit topology to obtain a connection diagram of a substrate of a power module — S505

FIG. 5

FIG. 6(a)

FIG. 6(b)

FIG. 7(a)

FIG. 7(b)

FIG. 7(c)

FIG. 8(a)

FIG. 8(b)

FIG. 9

EP 4 435 659 A1

System input: Input a connection diagram, a size constraint graph, design size constraints, and genetic algorithm parameters — S1001

Initial population: Compute DNA of a randomly produced initial-generation population based on the size constraint graph — S1002

Layout generation — S1003

Fitness evaluation: Evaluate parasitic inductance of a commutation loop and evaluate parasitic inductance of parallel chip branches — S1004

Fitness sorting: Compute a Pareto (Pareto) level and congestion — S1005

Is a maximum count of generations reached? — S1006

Add 1 to a count of generations — S1008

Child generation production: Screen out a parent generation based on the sorting, produce child-generation DNA through crossover and mutation, and generate a new population — S1007

No

Yes

Design output: Output a global Pareto front design set and a historical design set — S1009

FIG. 10

FIG. 11

Front solution A:

Layout template:

Design parameter: Chip spacing = 3.4 mm, not extended
Design result: $L_S$ = 4.32 nH; and $\Delta L_b$ = 2.84 nH

Front solution B:

Layout template:

Design parameter: Chip spacing = 2.7 mm, not extended
Design result: $L_S$ = 5.03 nH; and $\Delta L_b$ = 2.75 nH

Front solution C:

Layout template:

Design parameter: Chip spacing = 5.7 mm, not extended
Design result: $L_S$ = 5.57 nH; and $\Delta L_b$ = 1.09 nH

FIG. 12

(a) Voltage and current of a module
during turn-off

(b) Voltage and current of a module
during turn-on

(c) Current distribution of a chip
during turn-off

(d) Current distribution of a chip
during turn-on

FIG. 13

1400

Processing
unit 1402

Transceiver
unit 1401

FIG. 14

## INTERNATIONAL SEARCH REPORT

International application No.

**PCT/CN2022/114437**

### A. CLASSIFICATION OF SUBJECT MATTER

G06F 30/18(2020.01)i;  G06F 30/20(2020.01)i;  G06F 111/06(2020.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, ENTXT, EXTXTC, DWPI, CNKI, 功率模块, 优化, 布局, 路径, 规划模型, 遗传算法, sic, optimize, layout, path, Genetic Algorithm

### C. DOCUMENTS CONSIDERED TO BE RELEVANT

| Category* | Citation of document, with indication, where appropriate, of the relevant passages | Relevant to claim No. |
|---|---|---|
| X | CN 112257376 A (HYGON INFORMATION TECHNOLOGY CO., LTD.) 22 January 2021 (2021-01-22) description, paragraphs [0042]-[0078] | 1-8, 13-20 |
| A | CN 113065307 A (ZHEJIANG UNIVERSITY) 02 July 2021 (2021-07-02) entire document | 1-28 |
| A | CN 112270148 A (SHANDONG YUNHAI GUOCHUANG CLOUD COMPUTING EQUIPMENT INDUSTRY INNOVATION CENTER CO., LTD.) 26 January 2021 (2021-01-26) entire document | 1-28 |
| A | US 5764532 A (IBM) 09 June 1998 (1998-06-09) entire document | 1-28 |
| PX | CN 114491881 A (HUAWEI DIGITAL POWER TECHNOLOGIES CO., LTD.) 13 May 2022 (2022-05-13) entire document | 1-28 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 October 2022** | **07 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/114437**

| Patent document<br>cited in search report | | | Publication date<br>(day/month/year) | Patent family member(s) | | | Publication date<br>(day/month/year) |
|---|---|---|---|---|---|---|---|
| CN | 112257376 | A | 22 January 2021 | None | | | |
| CN | 113065307 | A | 02 July 2021 | CN | 113065307 | B | 17 May 2022 |
| CN | 112270148 | A | 26 January 2021 | None | | | |
| US | 5764532 | A | 09 June 1998 | None | | | |
| CN | 114491881 | A | 13 May 2022 | None | | | |

Form PCT/ISA/210 (patent family annex) (January 2015)

**REFERENCES CITED IN THE DESCRIPTION**

**Patent documents cited in the description**

- CN 202111619868